# EUROPÄISCHE PATENTSCHRIFT

(11) **EP 3 345 288 B1**
(45) Veröffentlichungstag und Bekanntmachung des Hinweises auf die Patenterteilung: **06.05.2020**
(21) Anmeldenummer: 16751614.5
(22) Anmeldetag: 17.08.2016
(51) Int. Cl.: H02K 15/03, H02K 15/02, H02K 1/27

(54) **VERFAHREN UND MONTAGEVORRICHTUNG ZUR MONTAGE EINER ELEKTRISCHEN MASCHINE**
METHOD AND ASSEMBLY DEVICE FOR ASSEMBLING AN ELECTRIC MACHINE
PROCÉDÉ ET DISPOSITIF DE MONTAGE D'UNE MACHINE ÉLECTRIQUE

(30) Priorität: 04.09.2015 DE 102015216971
(43) Veröffentlichungstag der Anmeldung: 11.07.2018
(73) Patentinhaber: ThyssenKrupp Presta TecCenter AG, 9492 Eschen (LI); thyssenkrupp AG, 45143 Essen (DE)
(72) Erfinder: HÖBER, Raphael, 6712 Thüringen (AT); PAUL, Daniel, 09235 Burkhardtsdorf (DE); MEUSEL, Jürgen, 09573 Dittmannsdorf (DE)
(74) Vertreter: thyssenkrupp Intellectual Property GmbH
(86) Internationale Anmeldenummer: PCT/EP2016/069504
(87) Internationale Veröffentlichungsnummer: WO 2017/036798

(56) Entgegenhaltungen:
- EP-A1- 2 860 848
- EP-A1- 2 860 848
- CN-A- 103 779 993
- CN-A- 103 779 993
- JP-A- H1 189 186
- JP-A- H1 189 186
- JP-A- H08 126 262
- JP-A- 2004 153 962
- KR-B1- 100 832 134
- US-A- 2 390 170
- US-A- 2 390 170

## Beschreibung

Die vorliegende Erfindung betrifft ein Verfahren sowie eine Montagevorrichtung zur Montage einer elektrischen Maschine. Ferner betrifft die vorliegende Erfindung ein Rotorsegment.

Grundlegend ist die Verwendung von elektrischen Maschinen, wie beispielsweise elektrischen Motoren oder elektrischen Generatoren bekannt. Eine elektrische Maschine ist eine in der elektrischen Energietechnik eingesetzte Maschine und stellt eine Form eines Energiewandlers dar. Es gibt eine Vielzahl verschiedener Typen von elektrischen Maschinen, sodass diese insbesondere über ihren Aufbau voneinander unterschieden werden. Bei rotierenden elektrischen Maschinen kann beispielsweise zwischen Kommutatormaschinen, Synchronmaschinen und Asynchronmaschinen unterschieden werden. Diese Klassifizierung betrifft insbesondere die Wirkungsweise der Maschine selbst. Es ist auch möglich eine Klassifizierung von rotierenden elektrischen Maschinen hinsichtlich deren Stromart vorzunehmen, sodass beispielsweise von Gleichstrommaschinen, Wechselstrommaschinen oder Dreiphasen - Wechselstrommaschinen gesprochen werden kann. Elektrische Maschinen weisen grundsätzlich einen Stator, das heißt ein feststehendes Element, welches auch als Ständer bezeichnet wird, sowie einen Rotor, das bedeutet einen Läufer, welcher ein rotierendes Element darstellt, auf. Der Stator besteht zumeist aus einem massiven Eisenkern zur Führung eines magnetischen Flusses. Ein magnetisches Feld mit wechselnder Polarität wird hierbei beispielsweise durch Permanentmagnete erzeugt. Der Rotor besteht zumeist aus einem Eisenblechpaket, in dessen Nuten sich Spulen aus beispielsweise Kupferdraht befinden. Diese Spulen sind mit entsprechenden Haken des Kommutators verbunden.

Bei der Anordnung des Blechpakets auf der Rotorwelle ist zu beachten, dass dieses Blechpaket derart befestigt wird, dass radial zwischen dem Wellenaußendurchmesser und dem Blechpaketinnendurchmesser kein Pressverband erforderlich ist, um eine Spaltbildung zwischen dem Wellensegment und dem Blechpaket zu ermöglichen. Demzufolge ist es grundlegend bekannt ein axiales Klemmen der Blechpakete zwischen einzelnen Druckscheiben zur Befestigung der Blechpakete auf dem Wellensegment zu ermöglichen, wodurch eine reibschlüssige Drehmomentübertragung des in den Blechpaketen generierten Drehmoments über das Wellensegment bis zum Ort des Abgriffs, wie beispielsweise der Verzahnung erfolgt. Basierend auf diesem gewünschten radialen Spiel zwischen dem Außendurchmesser des Wellensegmentes und dem Blechpaketinnendurchmesser entsteht jedoch eine Berührungsfreiheit zwischen diesen Bauteilen, welche den Nachteil aufweist, dass die aus dem allgemeinen Stand der Technik bekannten Verbindungsverfahren, wie der Querpressverband oder der Formschluss, welche übliche Mittel zur Zentrierung und Winkelausrichtung des Blechpaketes darstellen, nicht zur Anwendung gelangen können. Beispielsweise insbesondere bei permanent erregten Synchronmaschinen ist es erforderlich, dass die Winkellage von einzelnen Blechpaketen zur Rotorwelle sowie auch untereinander bei der Montage detailliert einstellbar ist. Um insbesondere Rastmomente zu vermeiden, werden anstatt eines langen, axial durchgängigen Gesamtblechpaketes, mehrere axiale Teilabschnitte (mehrere aneinander angereihte Blechpakete) gebildet. Diese mit Permanentmagneten bestückten Blechpakete werden dann, wie aus dem allgemeinen Stand der Technik bekannt ist, mit einem Winkelversatz von beispielsweise 1° - 3° zueinander in der Reihe auf dem Wellensegment montiert. Hierbei ist es erforderlich die Winkellageausrichtung mittels einzelner Geometrieelemente zu ermöglichen, welche in jeder Variante der Einzelpaketscheiben versetzt zum eigentlichen elektromagnetisch ausgelegten Blechschnitt, wie zum Beispiel den Magnettaschen vorliegen müssen. Als nachteilig wird hierbei angesehen, dass mehrere Blechpaketgeometrie vorgehalten werden müssen und zudem eine Magnetflussbeeinflussung mittels der Geometrieelemente in jeder der Varianten ungleich ist. Folglich wird die eigentliche Funktion der optimalen Drehmomenterzeugung beeinträchtigt, was zu einer Drehungleichförmlichkeit im Betrieb führt, insbesondere da die Scheiben nicht geometriegleich sind.

So ist beispielsweise in der DE 519 745 B ein Verfahren zur Befestigung eines Blechpaketes von Läufern elektrischer Maschinen dargestellt. Hierbei wird in einer dem jeweiligen Zweck entsprechenden Entfernung vom Ende eines rohrartigen Hohlkörpers an diesen eine Wulst als Anschlag angestaucht und nachfolgend die Bleche aufgereiht und das Ganze in eine Pressvorrichtung gebracht. Der Hohlkörper mit den Blechen wird dann auf einen kalibrierten Dorn aufgeschoben. Bei einem nun nachfolgenden Pressvorgang werden zunächst die in ihrem Umfang durch Führungsleisten oder einen Zylinder zwangsläufig zentrisch geführten Bleche axial zusammengepresst, danach wird der Druck auf den Hohlkörper übertragen und dieser wird auf der ganzen Länge des Blechpaketes derart gestaucht, dass er sich unter hohem Druck gegen die einzelnen Bleche anlegt. Mit dem hier beschriebenen Verfahren kann jedoch ein gewünschtes radiales Spiel zwischen dem Wellenaußendurchmesser und dem Blechpaketinnendurchmesser nicht erzeugt werden.

In der DE 103 32 958 A1 ist ein Verfahren zur Herstellung einer festen Verbindung zwischen einem Hohlzylinder und einem aus einer Vielzahl von axial aneinander liegenden Profillamellen bestehenden hohlzylinderförmigen Lamellenpaket beschrieben. Hierbei wird ein Innenzylinder in den Hohlzylinder weitgehend kräftefrei eingeschoben und nach Erreichen einer vorgegebenen axialen Einschubposition durch Relativdrehung von Innenzylinder und Hohlzylinder zueinander ein Kraftschluss zwischen dem Innenzylinder und dem Hohlzylinder hergestellt. Hierfür ist es erforderlich, dass die Innenkontur des Hohlzylinders und die Außenkontur des Innenzylinders aufeinander abgestimmt geformt werden.

Ein Verfahren zur Montage eines Rotorsegmentes einer elektrischen Maschine ist ferner aus der JP H11 89186 A bekannt geworden. Hier wird ein Verfahren zur Montage eines Rotorsegmentes einer elektrischen Maschine beschrieben, wobei das Rotorsegment der elektrischen Maschine zumindest eine Rotorwelle, wenigstens ein auf der Rotorwelle gefügtes Blechpaket aufweist. Zur Herstellung des Rotorsegmentes wird die Rotorwelle auf einer Montagevorrichtung angeordnet und mittels eines Ausrichtemittels der Montagevorrichtung ausgerichtet. Ferner wird ein Blechpaket innerhalb eines Spannmittels der Montagevorrichtung angeordnet. Das Blechpaket wird mittels eines Positioniermoduls des Spannmittels ausgerichtet. Die Rotorwelle wird derart relativ zu dem Spannmittel bewegt, dass das Blechpaket auf der Rotorwelle aufgeschoben wird. Wenngleich hier ein brauchbares Verfahren zur Montage eines Rotorsegmentes einer elektrischen Maschine beschrieben wird, so ist hier noch weiterer Verbesserungsbedarf.

JP2004153962 A offenbart einen Rotor umfassend mehrere Rotorsegmente, wobei die Rotorsegmente Markierungen aufweisen, welche als Positionierungsmittel dienen.

Es ist daher die Aufgabe der vorliegenden Erfindung, die voranstehend beschriebenen Nachteile bei einem Verfahren und einer Vorrichtung zur Montage eines Rotorsegmentes einer elektrischen Maschine zumindest teilweise zu beheben. Insbesondere ist es die Aufgabe der vorliegenden Erfindung ein Verfahren und eine Montagevorrichtung zur Montage eines Rotorsegmentes einer elektrischen Maschine zu schaffen, die auf einer einfachen kostengünstigen Art und Weise eine Zentrierung sowie auch eine Winkelausrichtung von Blechpaketen auf der Rotorwelle des Rotorsegmentes ermöglichen.

Die voranstehende Aufgabe wird gelöst durch ein Verfahren zur Montage eines Rotorsegmentes einer elektrischen Maschine mit den Merkmalen gemäß Anspruch 1 sowie durch eine Montagevorrichtung zur Montage eines Rotorsegmentes einer elektrischen Maschine mit den Merkmalen gemäß Anspruch 11. Ferner wird die voranstehende Aufgabe gelöst durch ein Rotorsegment mit den Merkmalen gemäß Anspruch 15. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Montagevorrichtung sowie dem erfindungsgemäßen Rotorsegment und jeweils umgekehrt, sodass bezüglich der Offenbarung zu den einzelnen Erfindungsaspekten stets wechselseitig Bezug genommen wird bzw. werden kann. Außerdem kann das erfindungsgemäße Verfahren mit der erfindungsgemäßen Montagevorrichtung durchgeführt werden bzw. das erfindungsgemäße Rotorsegment unter Verwendung des erfindungsgemäßen Verfahrens erzeugt bzw. mit der erfindungsgemäßen Montagevorrichtung montiert werden.

Das erfindungsgemäße Verfahren zur Montage eines Rotorsegmentes einer elektrischen Maschine, wobei das Rotorsegment zumindest eine Rotorwelle, wenigstens zwei auf der Rotorwelle gefügte Blechpakete, sowie zwei die wenigstens zwei Blechpakete axial einspannende Druckelemente aufweist, weist die folgenden Schritte auf:
- Anordnen der Rotorwelle in einer Montagevorrichtung und Ausrichten der Rotorwelle mittels eines Ausrichtmittels der Montagevorrichtung,
- Anordnen der wenigstens zwei Blechpakete sowie zumindest des zweiten Druckelementes, oder des ersten Druckelementes, innerhalb eines Spannmittels der Montagevorrichtung,
- Ausrichten zumindest der wenigsten zwei Blechpakete hinsichtlich deren Winkellage mittels eines Positioniermoduls des Spannmittels, wobei die Anzahl der Positioniermodule der Anzahl der auf der Rotorwelle anzuordnenden Blechpakete entspricht, und
- Bewegen der Rotorwelle relativ zu dem Spannmittel derart, dass die wenigstens zwei Blechpakete auf der Rotorwelle aufgeschoben und zumindest das zweite Druckelement oder das erste Druckelement mit der Rotorwelle verbunden wird.

Das Rotorsegment ist erfindungsgemäß ein Bestandteil einer elektrischen Maschine, welche beispielsweise, wie zuvor genannt, ein elektrischer Motor oder auch ein elektrischer Generator, wie beispielsweise eine Gleichstrommaschine oder eine Asynchronmaschine ist. Vorteilhaft soll auf der Rotorwelle des Rotorsegmentes der elektrischen Maschine wenigstens zwei Blechpakete, insbesondere sechs Blechpakete, angeordnet werden. Ein Blechpaket besteht vorteilhaft aus einer Mehrzahl von geschichteten Elektroblechen, welche beispielsweise mit Nieten, Klammern oder einseitigem Schweißen zu dem Blechpaket miteinander verpresst bzw. verbunden werden. Die Rotorwelle selbst weist zumindest ein Wellensegment, wie beispielsweise eine Vollwelle oder eine Hohlwelle auf. Zudem ist es möglich, dass die Rotorwelle auch wenigstens ein an dem Wellensegment angeordnetes Flanschelement, vorteilhaft auch zwei an dem Wellensegment angeordnete Flanschelemente aufweist. Dabei ist ein Flanschelement an einem ersten distalen Ende des Wellensegmentes angeordnet, während das andere (zweite) Flanschelement an einem anderem (zweiten) distalen Ende des Wellensegmentes, welches dem ersten distalen Ende gegenüberliegt, angeordnet ist. Es ist des Weiteren denkbar, dass die Rotorwelle zumindest auch ein Druckelement aufweist oder das wenigstens ein Druckelement, vorteilhaft zwei Druckelemente an der Rotorwelle zur Erzeugung eines Rotorsegmentes angeordnet werden. Vorteilhaft sind die wenigstens zwei Blechpakete zwischen zwei Druckelementen eingespannt. Die zur Einspannung der wenigstens zwei Blechpakete und vorteilhaft einer Mehrzahl an Blechpaketen verwendeten Druckelemente sind vorteilhaft Druckscheiben, zwischen denen die wenigstens zwei Blechpakete und vorteilhaft eine Mehrzahl an Blechpaketen angeordnet wird bzw. werden. Mittels der Druckelemente werden die Blechpakete aneinander gepresst bzw. die wenigstens zwei Blechpakete in einer vordefinierten Position und Lage relativ zur Rotorwelle, insbesondere zum Wellensegment der Rotorwelle positioniert. Die wenigstens zwei Blechpakete werden vorteilhaft koaxial zum Wellensegment angeordnet. Vorteilhaft ist die Rotorwelle derart ausgebildet, dass diese in einer Montagevorrichtung angeordnet und mittels eines Ausrichtmittels, welches beispielsweise als Ausrichtdorn oder als Ausrichtspitze oder als Ausrichtfutter oder als Ausrichtgreifer ausgebildet ist, ausrichtbar ist. Demnach ist es denkbar, dass das Ausrichtmittel beispielsweise ein Futter der Firma Hainbuch ist, welches auch als Hainbuchfutter bekannt ist. Das Ausrichtmittel der Montagevorrichtung dient vorteilhaft dazu die Rotorwelle relativ zu den wenigsten zwei Blechpaketen auszurichten, vorteilhaft die Rotorwelle im Wesentlichen koaxial zu den Blechpaketen auszurichten. Die wenigstens zwei Blechpakete sind innerhalb eines Spannmittels der Montagevorrichtung angeordnet. Mittels des Ausrichtmittels sowie des Spannmittels findet folglich eine Ausrichtung der Rotorwelle relativ zu den angeordneten Blechpaketen sowie zu wenigstens einem der innerhalb des Spannmittels angeordneten Druckelemente statt.

Das Spannmittel dient vorteilhaft dazu die wenigstens zwei Blechpakete sowie eines der Druckelemente, beispielsweise das erste Druckelement oder das zweite Druckelement oder auch beide Druckelemente in einer definierten Position relativ zur Rotorwelle zu positionieren. Zur detaillierten Ausrichtung der Blechpakete und/oder des Druckelementes bzw. der Druckelemente dient ein Positioniermodul des Spannmittels. Das Spannmittel selbst ist vorteilhaft ein Spannfutter, insbesondere ein Spanntopf. Das Positioniermodul weist beispielsweise Greifelement oder auch Schiebeelement, insbesondere Bewegungselemente auf, mittels welchen die Blechpakete unter anderem hinsichtlich deren Winkelausrichtung positionierbar ist. Es ist des Weiteren denkbar, dass das Positioniermodul Sensoren, insbesondere wenigstens ein Sensormittel oder eine Mehrzahl an Sensormittel, zur Messung, insbesondere Erfassung der Position und Lage der eingespannten Blechpakete bzw. der Mehrzahl an eingespannter Blechpakete aufweist. Es ist des Weiteren möglich, dass das Spannmittel bzw. die Montagevorrichtung selbst eine Auswerteeinheit aufweist, welche die SOLL-Werte mit den IST-Werten hinsichtlich der Position und Lage der Blechpakete innerhalb des Spannmittels vergleicht und die Ergebnisse auswertet. Es ist des Weiteren denkbar, dass das Spannmittel, insbesondere die Montagevorrichtung selbst auch eine Übertragungseinheit aufweist, welche entsprechende Steuerbefehle an eine Steuereinheit zur Bewegung bzw. Ansteuerung der Bewegungselemente des Positioniermoduls ausgibt. Die Steuereinheit bzw. Antriebseinheit zur Ansteuerung der Bewegungselemente des Positioniermoduls dient demnach vorteilhaft dazu die wenigstens zwei Blechpakete, insbesondere eine Mehrzahl an Blechpaketen, innerhalb des Spannmittels derart zu positionieren, dass die Blechpakete beispielsweise eine zueinander definierte Winkellage aufweisen.

Nach der Anordnung der Rotorwelle sowie der Blechpakete und wenigstens eines Druckelementes oder auch beider Druckelemente in der Montagevorrichtung wird die Rotorwelle relativ zu dem Spannmittel und demnach relativ zu den Blechpaketen sowie dem Druckelement bzw. den Druckelementen bewegt. Das bedeutet, dass sich das Ausrichtmittel relativ zu dem Spannmittel derart bewegt, dass die wenigstens zwei Blechpakete auf die Rotorwelle, insbesondere das Wellensegment der Rotorwelle aufgeschoben wird. Zusätzlich zu den Blechpaketen wird auch wenigstens ein Druckelement oder auch beide Druckelemente an der Rotorwelle angeordnet bzw. bei einer Ausgestaltung von Druckscheiben als Druckelemente auf die Rotorwelle aufgeschoben. Vorteilhaft weist die Rotorwelle, insbesondere das Wellensegment der Rotorwelle zumindest einen Bereich mit einer Materialaufwerfung, vorteilhaft mit zwei Materialaufwerfungen, wie beispielsweise einer Rollierung auf. Die Materialaufwerfungen sind vorteilhaft an den jeweiligen distalen Enden des Wellensegmentes, insbesondere der Umfangswandung des Wellensegmentes der Rotorwelle ausgebildet. Vorteilhaft weist das Blechpaket eine Durchlassöffnung bzw. Durchgangsöffnung bzw. Durchgangsbohrung auf, durch welche die Rotorwelle hindurchgeführt wird. Bei Vorliegen einer Druckscheibe als Druckelement, wobei auch die Druckscheibe eine im Wesentlichen zentrisch ausgebildete Durchgangsöffnung aufweist, wird vorteilhaft die Druckscheibe auf einem distalen Ende, insbesondere auf der Materialaufwerfung an dem distalen Ende der Rotorwelle aufgepresst. Bei einem Aufschieben eines Druckelementes, insbesondere einer Druckscheibe auf die Rotorwelle wird folglich ein Pressverband zwischen der Rotorwelle, insbesondere dem Wellensegment der Rotorwelle im Bereich dieser Materialaufwerfung bzw. Rollierung und dem Druckelement hergestellt. Dies ist dadurch begünstigt, dass die Rotorwelle, insbesondere das Wellensegment im Bereich der Materialaufwerfung einen größeren Außendurchmesser aufweist als der Druckscheibendurchgangsdurchmesser der zentrischen Durchgangsöffnung der Druckscheibe groß ist. Es ist zudem auch denkbar, dass das Druckelement als Klemme oder Zange ausgebildet ist, und entsprechend an der Rotorwelle anordenbar ist, um die mindestens zwei Blechpakete zwischen sich und dem anderen Druckelement, insbesondere dem ersten Druckelement einzuspannen. Hierbei weist das Wellensegment der Rotorwelle keine Materialaufwerfung auf. Es ist des Weiteren möglich, dass, sofern zwei Druckelemente, insbesondere Druckscheiben im Spannmittel angeordnet sind, zumindest die erste Druckscheibe einen Druckscheibendurchgangsdurchmesser aufweist, welcher größer ausgebildet ist, als der Außendurchmesser der zweiten Materialaufwerfung am zweiten distalen Ende des Wellensegmentes. Dabei dient vorteilhaft die erste Materialaufwerfung an einem ersten distalen Ende des Wellensegmentes zur Anordnung eines ersten Druckelementes, insbesondere einer ersten Druckscheibe. Die zweite Materialaufwerfung an einem zweiten distalen Ende des Wellensegmentes dient vorteilhaft zur Anordnung eines zweiten Druckelementes, insbesondere einer zweiten Druckscheibe. Vorteilhaft ist hierbei die erste Materialaufwerfung derart ausgebildet, dass das Wellensegment zumindest im Bereich der ersten Materialaufwerfung einen Außendurchmesser aufweist, welcher größer ist als der Außendurchmesser im Bereich der zweiten Materialaufwerfung. Des Weiteren ist es denkbar, dass die zweite Druckscheibe einen Druckscheibendurchgangsdurchmesser aufweist, welcher kleiner dimensioniert ist, als der Druckscheibendurchgangsdurchmesser der ersten Druckscheibe. Aufgrund beispielsweise einer Anordnung der Druckscheiben und der wenigstens zwei Blechpakete innerhalb des Spannmittels, bei welcher die wenigsten zwei Blechpakete zwischen der ersten Druckscheibe und der zweiten Druckscheibe angeordnet ist und die erste Druckscheibe derart positioniert ist, dass bei einem Einfahren der Rotorwelle in das Spannmittel die Durchgangsöffnung der ersten Druckscheibe zuerst von der Rotorwelle durchfahren wird, gleitet die erste Druckscheibe über die zweite Materialaufwerfung der Rotorwelle hinweg - aufgrund der Durchmesserunterschiede - bis zur ersten Materialaufwerfung, bei welcher eine Pressverbindung zwischen der Rotorwelle, insbesondere dem Wellensegment der Rotorwelle und der Blechscheibe entsteht.

Im Rahmen der Erfindung ist es des Weiteren denkbar, dass die Rotorwelle vormontiert wird. Hierbei ist es möglich, dass ein Wellensegment der Rotorwelle mit wenigstens einem der Druckelemente, insbesondere dem ersten Druckelement, derart verbunden wird, dass das erste Druckelement an einem ersten distalen Ende des Wellensegmentes angeordnet wird. Das Wellensegment der Rotorwelle ist vorteilhaft eine Hohlwelle oder auch eine Vollwelle. Das Druckelement, insbesondere das erste Druckelement ist vorteilhaft eine Druckscheibe, welche auf einen Bereich, insbesondere einem Bereich am ersten distalen Ende des Wellensegmentes angeordnet wird, welcher aufgrund einer Materialaufwerfung einen vergrößerten Wellensegmentaußendurchmesser aufweist, als der Durchmesser der Durchgangsbohrung des Druckelementes groß ist. Die Materialaufwerfung ist folglich im Bereich des ersten distalen Endes des Wellensegmentes an dessen Umfangswandung ausgebildet. Ebenfalls ist es denkbar, dass das Druckelement in Gestalt einer Klemme oder eines Anschlages an das Wellensegment der Rotorwelle angeordnet oder gar angeformt wird. Das zweite Druckelement ist vorteilhaft eine innerhalb des Spannmittels anordenbare Druckscheibe, welche beim Fügen der Blechpakete auf die Rotorwelle mit der Rotorwelle, insbesondere einer Materialaufwerfung auf dem Wellensegment der Rotorwelle verbunden wird. Es ist jedoch auch denkbar, dass ebenfalls das zweite Druckelement in Gestalt einer Klemme oder eines Anschlages etc. ausgestaltet ist und nach dem Aufbringen der wenigstens zwei Blechpakete derart angeordnet wird, dass ein Einklemmen der Blechpakete zwischen den Druckelementen ermöglicht wird. Es ist zudem denkbar, dass das beispielsweise in Gestalt einer Klemme oder eines Anschlages etc. ausgebildete zweite Druckelement ebenfalls im Spannmittel angeordnet wird und gemeinsam mit den wenigstens zwei Blechpaketen mit dem Wellensegment der Rotorwelle verbunden wird. Ebenfalls denkbar ist die Anordnung eines als Druckscheibe ausgebildeten ersten Druckelementes sowie eines als Anschlag oder Klemme etc. ausgebildeten zweiten Druckelementes.

Es ist des Weiteren möglich, dass während der Vormontage der Rotorwelle das Wellensegment mit einem ersten Flanschelement verbunden wird, welches an einer ersten Stirnseite des Wellensegmentes angeordnet wird bzw. mit einem zweiten Flanschelement verbunden wird, welches an einer zweiten Stirnseite des Wellensegmentes angeordnet wird. Vorteilhaft dienen die Flanschelemente auch dazu eine Verbindung mit insbesondere dem Ausrichtmittel bzw. dem Haltemittel der Montagevorrichtung einzugehen, um eine Ausrichtung bzw. Anordnung des Wellensegmentes bzw. der Rotorwelle innerhalb der Montagevorrichtung zu ermöglichen.

Im Rahmen der Erfindung ist es des Weiteren möglich, dass die Rotorwelle derart relativ zum Spannmittel bewegt wird, bis die mindestens zwei Blechpakete ein an dem Wellensegment der Rotorwelle vormontiertes Druckelement, insbesondere das erste Druckelement, kontaktiert. Demzufolge wird die Rotorwelle, insbesondere das Wellensegment derart weit in den Spanntopf eingefahren und durch die Durchgangsöffnung des Blechpaketes bewegt, bis das erste Druckelement an einer dem Druckelement zugewandten Seitenwandung des Blechpaketes anliegt. Es wäre auch denkbar, dass die Rotorwelle derart relativ zum Spannmittel bewegt wird, bis die im Spannmittel angeordnete Komponentenanordnung bestehend aus dem ersten Druckelement, dem zweiten Druckelement und dem wenigstens einen zwischen den beiden Druckelementen angeordneten Blechpakete auf eine vorbestimmte Position auf dem Wellensegment der Rotorwelle aufgebracht bzw. aufgeschoben wurden. Demzufolge wird die Rotorwelle, insbesondere das Wellensegment derart weit in den Spanntopf eingefahren und zumindest durch die Durchgangsöffnung des Blechpaketes sowie vorteilhaft auch durch die Durchgangsöffnungen der als Druckscheiben ausgebildeten Druckelemente bewegt, bis wenigstens das erste Druckelement an einem ersten distalen Ende des Wellensegmentes angeordnet, vorteilhaft auch bis das zweite Druckelement an einem zweiten distalen Ende des Wellensegmentes angeordnet ist.

Vorteilhaft ist es möglich, dass das Ausrichtmittel an ein erstes Flanschelement der Rotorwelle derart angeordnet wird, dass zumindest ein Futtersegment des Ausrichtmittels einen Abschnitt des ersten Flanschelementes zumindest abschnittsweise umgreift oder ein Aufnahmesegment des Ausrichtmittels zumindest abschnittsweise in eine Ausnehmung des ersten Flanschelementes eingreift. Vorteilhaft dienen folglich das Futtersegment sowie das Aufnahmesegment zur Positionierung und Ausrichtung der Rotorwelle relativ zu dem Spannmittel der Montagevorrichtung und demzufolge zu dem in dem Spannmittel der Montagevorrichtung angeordneten Blechpaketen sowie dem Druckelement. Das Aufnahmesegment des Ausrichtmittels ist vorteilhaft in Gestalt eines Dorns bzw. eines Pins ausgestaltet, um zumindest abschnittsweise in eine Ausnehmung des Flanschelementes einzugreifen.

Es ist des Weiteren denkbar, dass ein Aufnahmemittel zur Aufnahme und Führung der Rotorwelle an dem zweiten Flanschelement der Rotorwelle angeordnet wird, wobei das Aufnahmemittel derart bewegbar ausgestaltet ist, dass es zwischen dem Spannmittel und der Rotorwelle verfahrbar ist. Vorteilhaft erstreckt sich demzufolge das Aufnahmemittel, vorteilhaft ein Schubelement, wie beispielsweise eine ausfahrbare Schubstange des Aufnahmemittels durch das Spannmittel der Montagevorrichtung hindurch, sodass das Aufnahmemittel die Rotorwelle an dem zweiten Flanschelement der Rotorwelle kontaktieren bzw. aufnehmen kann. Vorteilhaft ist das Ausrichtmittel sowie das Aufnahmemittel der Montagevorrichtung bewegbar ausgestaltet, wobei die Rotorwelle selbst vorteilhaft zwischen dem Ausrichtmittel und dem Aufnahmemittel eingespannt ist. Die Rotorwelle ist mittels des Aufnahmemittels und Ausrichtmittels der Montagevorrichtung beispielsweise derart relativ zum Spannelement und dem im Spannelement angeordneten Blechpaket bewegbar, dass das Aufnahmemittel mittels eines entsprechenden ausfahrbaren Elementes, wie dem Schubelement, vorteilhaft eingefahren wird, während das Ausrichtmittel mittels eines entsprechenden ausfahrbaren Elementes ausgefahren wird, um ein Fügen bzw. Aufbringen des Blechpaketes auf der Rotorwelle, insbesondere dem Wellensegment der Rotorwelle, zu ermöglichen. Oder vice versa, sodass es des Weiteren möglich ist, dass das Aufnahmemittel gemeinsam mit der Rotorwelle entlang des Spannmittels bewegt wird.

Im Rahmen der Erfindung ist es denkbar, dass ein Sensormittel des Spannmittels die Winkellage von zumindest einer Markierung des wenigsten einen Blechpaketes erfasst. Vorteilhaft weist folglich das Blechpaket wenigstens eine Markierung, welche beispielsweise in Gestalt einer Ausnehmung, wie einer Nut oder einer Vertiefung, oder eines Vorsprunges oder einer Farbmarkierung ausgestaltet ist, auf, welche folglich mit einem Sensormittel, wie beispielsweise einem optischen Sensor oder einem Tastsensor, erfassbar ist. Die Winkellage ermittelt das Sensormittel und sendet diese Informationen bzw. Daten vorteilhaft an eine Auswerteeinheit der Montagevorrichtung weiter. Die Auswerteeinheit der Montagevorrichtung wertet die erfassten IST-Werte hinsichtlich der Winkellage des Blechpaketes durch einen Vergleich mit den SOLL-Werten hinsichtlich der Lage aus. Bei Abweichung der IST-Winkellage zur SOLL-Winkellage des Blechpaketes wird eine Steuereinheit angetriggert. Die Steuereinheit ist vorteilhaft ein Bestandteil der Montagevorrichtung. Die Steuereinheit setzt die Bewegungselemente des Positioniermoduls derart in Bewegung, dass das Blechpaket beispielsweise hinsichtlich dessen Winkellage neu ausgerichtet wird.

Im Rahmen der Erfindung ist es des Weiteren vorgesehen, dass eine Mehrzahl an hinsichtlich deren Winkellage zueinander versetzbaren Blechpaketen auf der Rotorwelle angeordnet werden, wobei die Einstellung der Winkellage mittels eines Ausrichtwerkzeuges erfolgt, welches die Blechpakete in Berücksichtigung von an den Blechpaketen jeweils angeordneten Markierungen zueinander positioniert. Hierbei ist es denkbar, dass das Ausrichtwerkzeug in Gestalt einer Schablone ausgestaltet ist, welches im Wesentlichen entlang einer Ausrichtkante in axialer Richtung zumindest abschnittsweise entlang des Wellensegmentes bewegt wird und zumindest abschnittsweise in als Ausnehmung ausgestaltete Markierungen der Blechpakete eingreift bzw. innerhalb dieser Aussparung entlang bewegt wird. Das Ausrichtwerkzeug verdreht vorteilhaft jedes einzelne Blechpaket entsprechend einer vorgegebenen Winkellage. Vorteilhaft ist das Ausrichtwerkzeug ein Bestandteil des Spannmittels und ermöglicht den Winkelversatz der einzelnen Blechpakete während deren koaxialer Ausrichtung zur anzuordnenden Rotorwelle. Mittels des Ausrichtwerkzeuges ist eine einfache und prozesssichere Einstellung des Winkelversatzes der einzelnen Blechpakete des Rotorsegmentes zueinander realisierbar.

Im Rahmen der Erfindung werden vorteilhaft die Markierungen derart untereinander winkelversetzt positioniert, dass dadurch der Winkelversatz der Blechpakete eingestellt und wiedergegeben wird.

Es ist des Weiteren eine Montagevorrichtung zur Montage eines Rotorsegmentes einer elektrischen Maschine beansprucht, wobei das Rotorsegment zumindest eine Rotorwelle, wenigstens zwei auf der Rotorwelle gefügte Blechpakete sowie zwei die wenigstens zwei Blechpakete axial einspannende Druckelement aufweist. Die Montagevorrichtung weist erfindungsgemäß zumindest ein Ausrichtmittel zum Ausrichten der Rotorwelle in einer definierten Montageposition und ein Spannmittel zum Positionieren der wenigstens zwei Blechpakete sowie wenigstens eines der Druckelemente relativ zur Rotorwelle auf. Das Spannmittel umfasst erfindungsgemäß zumindest ein Positioniermodul zumindest zum Ausrichten der wenigstens zwei Blechpakete relativ zur Rotorwelle. Vorteilhaft wird mittels des Spannmittels eine koaxiale Ausrichtung der Rotorwelle, insbesondere des Wellensegmentes der Rotorwelle zu den wenigstens zwei Blechpaketen ermöglicht.

Vorteilhaft ist das Spannelement ein Spanntopf zur Aufnahme und Anordnung der mindestens zwei Blechpakete sowie eines der Druckelemente, insbesondere des zweiten Druckelementes. Es ist auch denkbar, dass das Spannelement in Gestalt eines Spannfutters ausgebildet ist und dafür dient das Druckelement, insbesondere das zweite Druckelement, welches beispielsweise in Gestalt einer Druckscheibe ausgebildet ist, aufzunehmen.

Es ist des Weiteren denkbar, dass das Ausrichtmittel zumindest ein Futtersegment zur teilweise umschließenden Aufnahme eines Abschnittes der Rotorwelle oder ein Aufnahmesegment zur teilweise eingreifenden Aufnahme in einen Abschnitt der Rotorwelle aufweist. Vorteilhaft ist das Aufnahmesegment federnd gelagert, insbesondere mittels einer Druckfeder federnd gelagert. Hierdurch wird eine definierte Druckkraft auf die Rotorwelle aufgebracht, um eine prozesssichere Einspannung der Rotorwelle zwischen dem Aufnahmemittel und dem Ausrichtmittel bei der Montagevorrichtung zu gewährleisten. Dadurch ist es vorteilhaft möglich auch Rotorwellen unterschiedlichster Größe und Dimension in ein und derselben Montagevorrichtung einzuspannen und diese relativ zum Spannmittel zu bewegen.

Bei der beschriebenen Montagevorrichtung ergeben sich sämtliche Vorteile, die bereits zu dem Verfahren zur Montage einer elektrischen Maschine gemäß dem ersten Aspekt der Erfindung beschrieben worden sind.

Das erfindungsgemäße Rotorsegment weist ein Wellensegment sowie zumindest zwei zueinander winkellageversetzt anordenbare Blechpakete auf, wobei jedes der Blechpakete zumindest eine Markierung aufweist. Diese Markierung ist vorteilhaft eine konkave oder konvexe Struktur, wie beispielsweise eine Materialausnehmung, wie eine Vertiefung, eine Rille oder Nut oder eine V-förmig eingestanzte Kerbe, oder eine Materialaufwerfung, wie eine Materialwölbung, oder eine einfache Abflachung oder eine Farbmarkierung. Jedes der Blechpakete weist mindestens ein Blech, vorteilhaft wenigstens zwei oder eine Mehrzahl von miteinander verbundenen Blechen auf. Bei Vorliegen von wenigstens zwei bzw. einer Mehrzahl an Blechen pro Blechpaket ist es möglich, dass wenigstens eines der Bleche des Blechpaketes eine Markierung aufweist. Es ist zudem möglich, dass das Rotorsegment mehr als zwei Blechpakete aufweist, wobei die Blechpakete jeweils zueinander winkellageversetzt auf dem Wellensegment anordenbar sind.

Es ist des Weiteren denkbar, dass das Rotorsegment zwei Druckelemente aufweist, welche die wenigstens zwei Blechpakete zwischen einander einspannen. Hierbei ist es möglich, dass wenigstens eines der Druckelemente beispielsweise eine Druckscheibe oder eine Klemme oder eine Spannzange oder ein vergleichbares Element ist, mittels welchem ein Aneinanderpressen der wenigstens zwei Blechpakete ermöglicht wird.

Es ist des Weiteren denkbar, dass die Blechpakete aus einer Mehrzahl an aneinander angeordneten Blechen bestehen, wobei jedes Blech eine Markierung aufweist. Vorteilhaft dient die Markierung dazu, eine Zentrierung und eine Winkellageausrichtung unabhängig von der Innengeometrie der einzelnen Bleche bzw. der einzelnen Blechpakete zu ermöglichen.

Es ist denkbar, dass die einzelnen Bleche pro Blechpaket derart zueinander ausgerichtet bzw. angeordnet sind, dass deren Markierungen miteinander fluchten bzw. fluchtend zueinander angeordnet sind. Das bedeutet, dass bei einer Paketierung der einzelnen Bleche die entstehenden Blechstapel bzw. Blechpakete diese Markierung dann auf deren gesamten axialen Höhe bzw. der Blechpaketbreite achsparallel und durchgängig aufweisen. Vorteilhaft weist jedes Blech eines Blechpaketes eine Markierung an dessen Außendurchmesser auf, wobei die Markierung beispielsweise eine Vertiefung ist, welche sich ausgehend vom Rand des Bleches zumindest abschnittsweise radial nach innen erstreckt. Bei einer fluchtenden Anordnung der Markierungen der einzelnen Bleche, ist vorteilhaft die Verwendung eines Werkzeuges, insbesondere einer Schablone zur Ausrichtung der einzelnen Blechpakete zueinander denkbar.

Es ist des Weiteren denkbar, dass die Markierungen als ein Vielfaches des zu versetzenden Winkels vorliegen. Demnach weist vorteilhaft jedes Blech eine 6-fache Markierung auf, sofern sechs Scheiben bzw. sechs Blechpakete winkellagenversetzt zueinander anzuordnen sind. Das bedeutet, dass vorteilhaft die Anzahl der Markierung pro Blechpaket bzw. pro Blech der Anzahl der zueinander winkellageversetzbaren Bleche bzw. Blechpakete pro Rotorsegment entspricht. Hierdurch ist es vorteilhaft ermöglicht, dass die Stanzgeometrie der einzelnen Bleche geometriegleich ist. Eine Vorhaltung verschiedener Ausführungsformen ist nicht erforderlich. Hierdurch ist eine kostengünstige Erzeugung winkellageversetzter Bleche bzw. Blechpakete ermöglicht. Der gewünschte Versatz der Winkellage wird vorteilhaft erst bei der Montage der Bleche bzw. der Blechpakete auf das Wellensegment realisiert, indem die hierfür vorgesehenen Markierungen jeweils um eine Rastierung zueinander versetzt werden. Zudem ergibt sich hierbei eine gute visuelle oder auch messoptikgestützte Kontrollmöglichkeit der korrekten Winkellage.

Alternativ ist es denkbar, dass die Markierungen bzw. geometrischen Merkmale je Orientierungsposition lediglich einmal pro Blech bzw. Blechscheibe ausgebildet sind. Hierbei ist es denkbar, dass der gewünschte Winkellageversatz mittels der oben aufgeführten Schablone ermöglicht ist, welche beispielsweise mit winkelversetzten Aufnahmen für die jeweiligen Scheiben bzw. Blechpakete ausgestattet ist.

Im Rahmen der Erfindung ist es vorgesehen, dass die Markierung eine Mehrzahl an Merkmalen aufweist, wobei die Anzahl der Merkmale pro Markierung der Anzahl der auf dem Wellensegment zu fügenden und zueinander winkellageversetzbaren Blechpakete entspricht. Die Anzahl der Merkmale pro Markierung entspricht demnach vorteilhaft der Anzahl der zueinander winkellageversetzbaren Blechpakete bzw. Bleche, derart, dass beispielsweise bei sechs zueinander in deren Winkellage zu versetzenden Blechen jedes der sechs Bleche eine Markierung mit sechs ausgeprägten Merkmalen aufweist. Demzufolge weist bei einer Anzahl von beispielsweise sechs zueinander in Winkellage zu versetzenden Blechpaketen jedes der Blechpakete zumindest eine Markierung mit sechs Merkmalen auf. Die Durchführung der Winkellageversetzung wird dadurch in einfacher und prozesssicherer Art und Weise ermöglicht. Es ist folglich denkbar, dass die Markierungen derart untereinander winkellageversetzt angeordnet sind, dass dies den Winkelversatz der Blechpakete wiedergeben.

Bei dem beschriebenen Rotorsegment ergeben sich sämtliche Vorteile, die bereits zu dem Verfahren zur Montage einer elektrischen Maschine gemäß dem ersten Aspekt der Erfindung oder zu der Montagevorrichtung gemäß dem zweiten Aspekt der Erfindung beschrieben worden sind.

Das erfindungsgemäßen Verfahren sowie eine Ausführungsform der erfindungsgemäßen Montagevorrichtung werden nachfolgend anhand von Zeichnungen näher erläutert. Es zeigen jeweils schematisch:
- Figur 1: in einer seitlichen Ansicht das Vormontageverfahren zur Montage einer Rotorwelle,
- Figur 2: in einer seitlichen Ansicht eine Ausführungsform einer vormontierten Rotorwelle,
- Figur 3: in einer frontalen Draufsicht die in der Figur 2 gezeigte Ausführungsform der vormontierten Rotorwelle,
- Figur 4: in einer seitlichen Ansicht das Montageverfahren der elektrischen Maschine,
- Figur 5: in einer seitlichen Ansicht eine Ausführungsform einer erfindungsgemäß montierte elektrische Maschine,
- Figur 6: in einer Draufsicht die in der Figur 5 gezeigte Ausführungsform der elektrischen Maschine,
- Figur 7: in einer seitlichen Schnittdarstellung eine Ausführungsform einer erfindungsgemäßen Montagevorrichtung,
- Figur 8: in einer seitlichen Schnittdarstellung eine weitere Ausführungsform einer erfindungsgemäßen Montagevorrichtung,
- Figur 9: in einer seitlichen Viertelschnittdarstellung eine Ausführungsform einer elektrischen Maschine mit winkelversetzt angeordneten Blechpaketen,
- Figur 10: in einer Draufsicht der in der Figur 9 gezeigten Ausführungsform einer elektrischen Maschine gekennzeichnete Schnitt B - B,
- Figur 11: eine Vergrößerung des Ausschnittes A der Figur 10,
- Figur 12: eine isometrische Ansicht der hinsichtlich der Winkellage relativ zueinander positionierten Blechpakete einer Ausführungsform einer elektrischen Maschine,
- Figur 13: die in der Figur 10 gezeigte Draufsicht auf eine Ausführungsform einer elektrischen Maschine mit einem Werkzeug zur Ausrichtung sowie zur Kontrolle der Winkelorientierung einzelner Blechpakete,
- Figur 14: eine Vergrößerung des in der Figur 13 gezeigten Werkzeuges zur willkürlichen Ausrichtung und Kontrolle der Winkelorientierung der einzelnen Blechpakete der elektrischen Maschine zueinander,
- Figur 15: eine Draufsicht auf ein Querschnitt einer Ausführungsform einer elektrischen Maschine zur Darstellung von nicht magnetisch aktiven Bereichen, und
- Figur 16: eine Vergrößerung des Ausschnittes T der Figur 15.

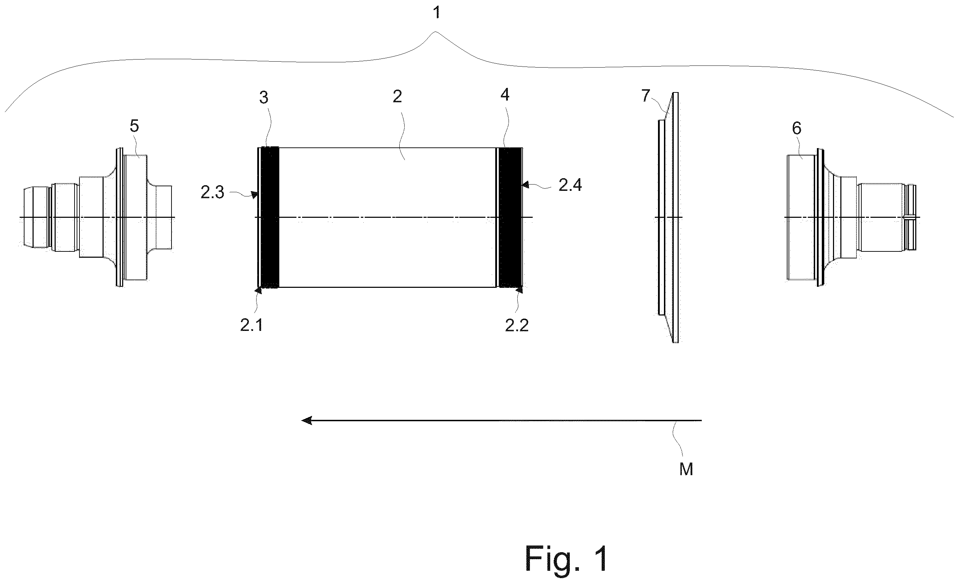

Elemente mit gleicher Funktion und Wirkungsweise sind in den Figuren 1 bis 16 jeweils mit denselben Bezugszeichen versehen.

In der Figur 1 ist in einer seitlichen Ansicht eine Rotorwelle 1, insbesondere ein Verfahren zur Vormontage der Rotorwelle 1 gezeigt. Die Rotorwelle 1 weist ein Wellensegment 2 auf, welches an einem ersten distalen Ende 2.1 eine erste Materialaufwerfung 3 bzw. Rollierung 3 und an einem zweiten distalen Ende 2.2 eine zweite Materialaufwerfung 4 bzw. Rollierung 4 aufweist. Das Wellensegment 2 selbst ist vorteilhaft als Vollwelle oder auch als Hohlwelle ausgebildet. Während der Vormontage zur Herstellung der Rotorwelle 1 wird das Wellensegment 2 mit einem ersten Flanschelement 5 verbunden, welches an der ersten Stirnseite 2.3 des Wellensegmentes 2 angeordnet wird. Nach dem Anordnen des ersten Flanschelementes 5 an dem Wellensegment 2 wird vorteilhaft ein erstes Druckelement 7, welches beispielsweise in Gestalt einer Druckscheibe ausgebildet ist, auf das Wellensegment 2 in Montagerichtung M aufgeschoben. Vorteilhaft wird das erste Druckelement 7 derart weit auf das Wellensegment 2 aufgeschoben, bis dieses das erste Flanschelement 5 kontaktiert bzw. auf die erste Rollierung 3 auftrifft. Aufgrund der ersten Rollierung 3 weist das Wellensegment 2 im Bereich des ersten distalen Endes 2.1 einen Außendurchmesser auf, welcher größer dimensioniert ist als ein Durchmesser der hier nicht gezeigten Durchgangsbohrung des ersten Druckelementes 7. Vorteilhaft ist es denkbar, dass bei einem Aufbringen des ersten Druckelementes 7 auf das Wellensegment 2 die zweite Rollierung 4 noch nicht ausgebildet ist. So ist es möglich, dass diese zweite Rollierung 4 erst nach dem Anordnen des ersten Druckelementes 7 auf dem Wellensegment 2 ausgebildet bzw. erzeugt wird, um vorteilhaft eine ungewollte Verbindung des ersten Druckelementes 7 dem Wellensegment 2 im Bereich der zweiten Rollierung 4 zu vermeiden. Es ist jedoch auch denkbar, dass die zweite Rollierung 4, entsprechend der ersten Rollierung 3, vor der Montage des ersten Druckelementes 7 auf dem Wellensegment 2 ausgebildet wird. Hierfür ist es erforderlich, dass das Wellensegment 2 im Bereich der zweiten Rollierung 4 bzw. der zweite Materialaufwerfung 4 einen geringeren Außendurchmesser aufweist, welcher von der Rollierung 4 in diesem Bereich verursacht wird, als insbesondere im Bereich der ersten Rollierung 3 bzw. der ersten Materialaufwerfung 3. Vorteilhaft ist demzufolge die zweite Rollierung 4 im Außendurchmesser geringer dimensioniert als der Innendurchmesser der Durchgangsbohrung des ersten Druckelementes 7. Folglich ist es möglich das Druckelement 7 - ohne eine Verbindung mit der zweiten Rollierung 4 zu bilden - über diese zweite Rollierung 4 hinweg zu schieben. Nach dem Aufbringen des ersten Druckelementes 7 wird das zweite Flanschelement 6 an die zweite Stirnseite 2.4 des Wellensegmentes 2 in Montagerichtung M montiert.

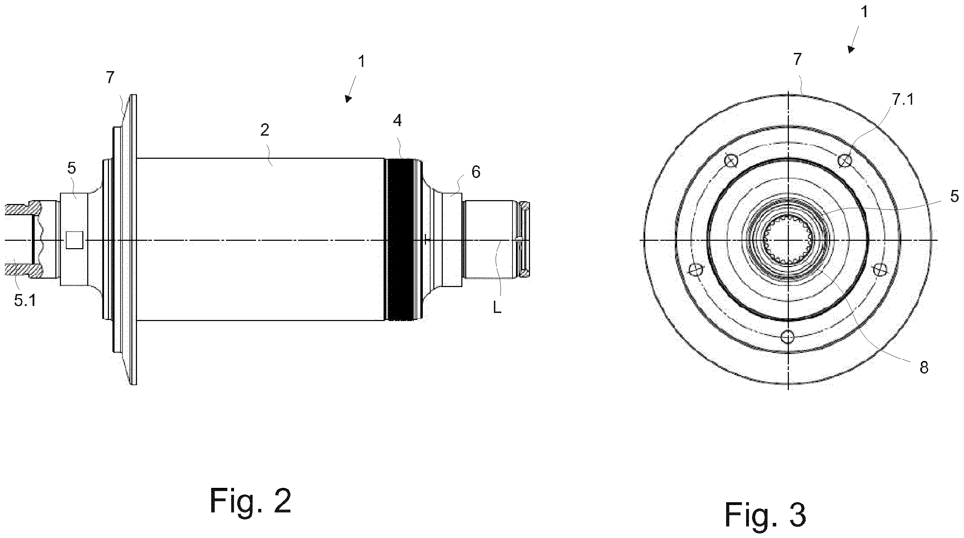

Eine Ausführungsform einer vormontierten Rotorwelle 1 ist in der Figur 2 gezeigt. Aus der Figur 2 ist zudem zu entnehmen, dass insbesondere das erste Flanschelement 5, vorteilhaft auch das zweite Flanschelement 6, eine Ausnehmung 5.1 aufweist/aufweisen. Vorteilhaft dient die Ausnehmung 5.1 dazu mit einem entsprechenden Ausrichtmittel einer Montagevorrichtung zu wechselwirken, wie nachfolgend noch detailliert erläutert wird. Vorteilhaft weist die in der Figur 2 gezeigte Ausnehmung 5.1 des ersten Flanschelementes 5 eine Innenverzahnung auf (vgl. Figur 3), welche vorteilhaft dazu dient in eine entsprechende Außenverzahnung eines Ausrichtmittels der Montagevorrichtung einzugreifen. Mit dem Bezugszeichen L ist die Längsachse der Rotorwelle 1 gekennzeichnet.

In der Figur 3 ist eine frontale Draufsicht auf die in der Figur 2 gezeigten Ausführungsform einer vormontierten Rotorwelle 1 gezeigt. Hierbei sind zudem Bohrungen 7.1 des Druckelementes 7 aufgezeigt. Diese Bohrungen 7.1 dienen beispielsweise zur Ermöglichung von sich durch das hier nicht gezeigte Blechpaket hindurch erstreckenden Kühlkanälen Zudem ist die Innenverzahnung 8 des ersten Flanschelementes 5 aufgezeigt, welche sich innerhalb der Ausnehmung 5.1 des ersten Flanschelementes 5 ausbildet.

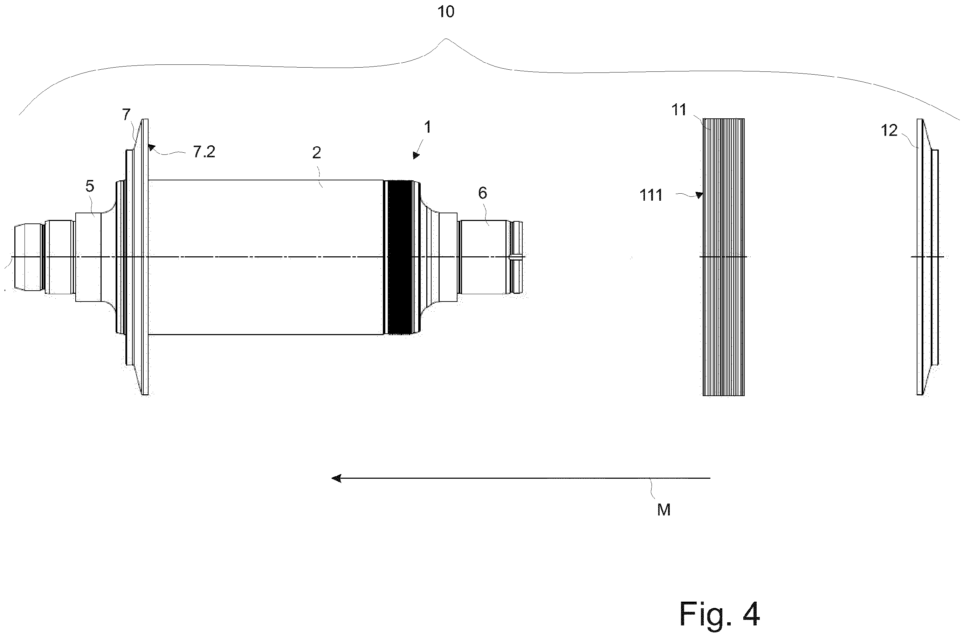

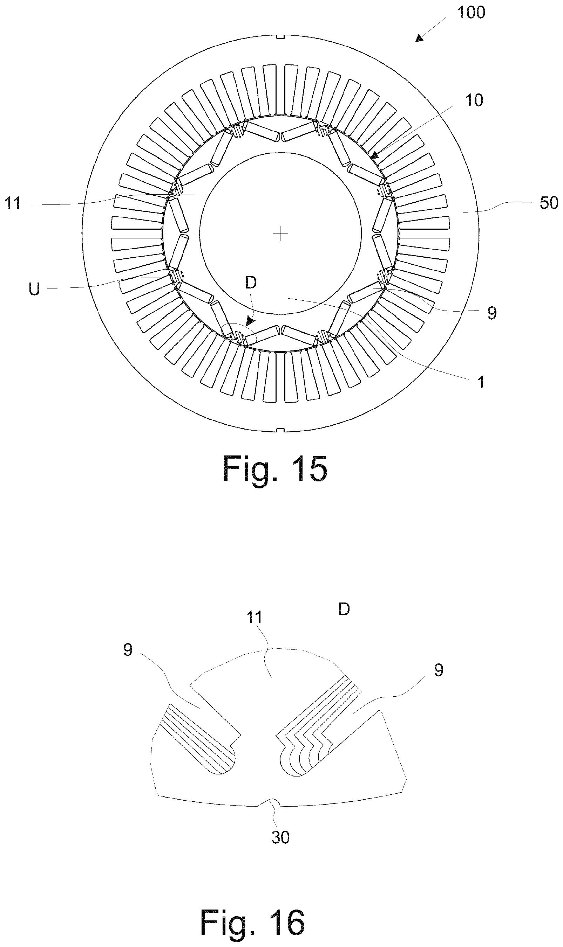

In der Figur 4 ist die in der Figur 3 gezeigte Ausführungsform einer Rotorwelle 1 während des Verfahrens der Endmontage zu einem Rotorsegment 10 gezeigt. Hierbei werden wenigstens ein Blechpaket 11 sowie das zweite Druckelement 12 an der Rotorwelle 1 angeordnet, um ein Rotorsegment 10 im Rahmen der Erfindung auszubilden. Zur Ausbildung einer elektrischen Maschine 100, wie in der nachfolgenden Figur 15 schematisch gezeigt, ist es denkbar, dass zusätzlich zu der Rotorwelle 1 mit angeordnetem Blechpaket 11 und zweitem angeordneten Druckelement 12 auch ein Statorelement bzw. ein Stator 50 (vgl. zum Beispiel Figur 15) angeordnet wird. Vorteilhafterstreckt sich das erfindungsgemäße Rotorsegment 10 zumindest abschnittsweise innerhalb des hier nicht gezeigten Statorelementes.

Bei einer Ausführungsform des erfindungsgemäßen Verfahrens zur Montage eines Rotorsegmentes 10 einer elektrischen Maschine, wie insbesondere in der Figur 4 gezeigt, wird beispielsweise das wenigstens eine Blechpaket 11 derart in Montagerichtung M bewegt, dass dieses mit der Seitenfläche 111 eine Seitenfläche 7.2 des ersten Druckelementes 7 kontaktiert. Es werden mindestens zwei Blechpakete 11 in Montagerichtung M auf die Rotorwelle 1, insbesondere auf das Wellensegment 2 der Rotorwelle 1 aufgeschoben. Um die wenigstens zwei Blechpakete 11 auf dem Wellensegment 2 der Rotorwelle 1 in einer definierten Winkelorientierung bzw. Winkellage zu verspannen, dient ein zweites Druckelement 12. Dieses zweite Druckelement 12 wird, wie in der Figur 4 gezeigt, ebenfalls in Montagerichtung M auf die Rotorwelle 1, insbesondere das Wellensegment 2 der Rotorwelle 1 aufgebracht. Mittels einer Pressverbindung zwischen dem zweiten Druckelement 12 und der zweiten Rollierung 4 des Wellensegmentes 2 wird das Druckelement 2 vorteilhaft verschiebefest in Axialrichtung und verdrehfest in Umfangsrichtung mit dem Wellensegment 2 der Rotorwelle 1 verbunden.

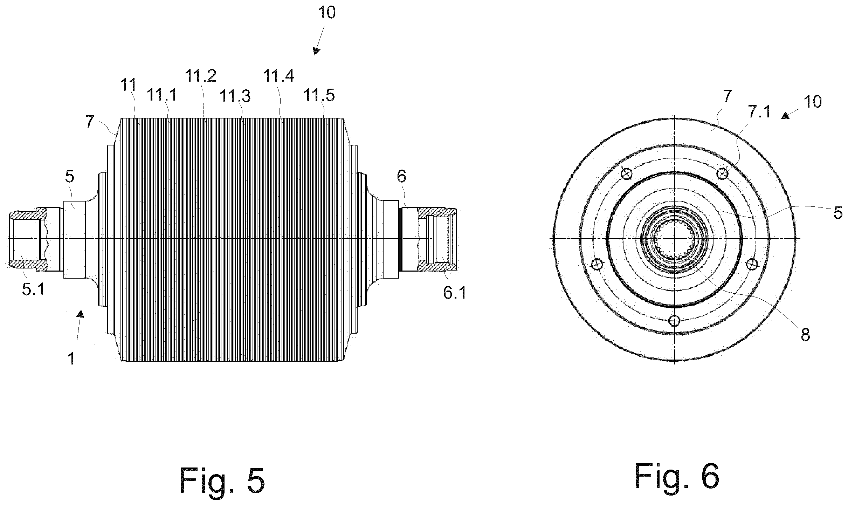

In der Figur 5 ist in einer seitlichen Ansicht eine Ausführungsform eines Rotorsegmentes 10 einer elektrischen Maschine gezeigt. Das Rotorsegment 10 weist eine Rotorwelle 1 mit einer Mehrzahl an auf dem hier nicht gezeigten Wellensegment der Rotorwelle 1 angeordneten Blechpaketen 11 bis 11.5, insbesondere sechs Blechpaketen 11 bis 11.5 auf. Vorteilhaft sind die Blechpakete 11 bis 11.5 zwischen dem ersten Druckelement 1 und dem zweiten Druckelement 12 eingespannt. Wie in der Figur 5 gezeigt, weist vorteilhaft auch das zweite Flanschelement 6 eine Ausnehmung 6.1 auf. Diese Ausnehmung 6.1 weist vorteilhaft eine Innenverzahnung auf, welche hier nicht gezeigt ist.

In der Figur 6 ist eine frontale Draufsicht auf die in der Figur 5 gezeigt Ausführungsform des Rotorsegmentes 10 einer elektrischen Maschine gezeigt. Hierbei ist wieder die Ausbildung der Innenverzahnung 8 des ersten Flanschelementes 5 verdeutlicht, sowie eine Ausbildung einer Mehrzahl an in Umfangsrichtung des ersten Druckelements 7 ausgebildeten Bohrungen 7.1.

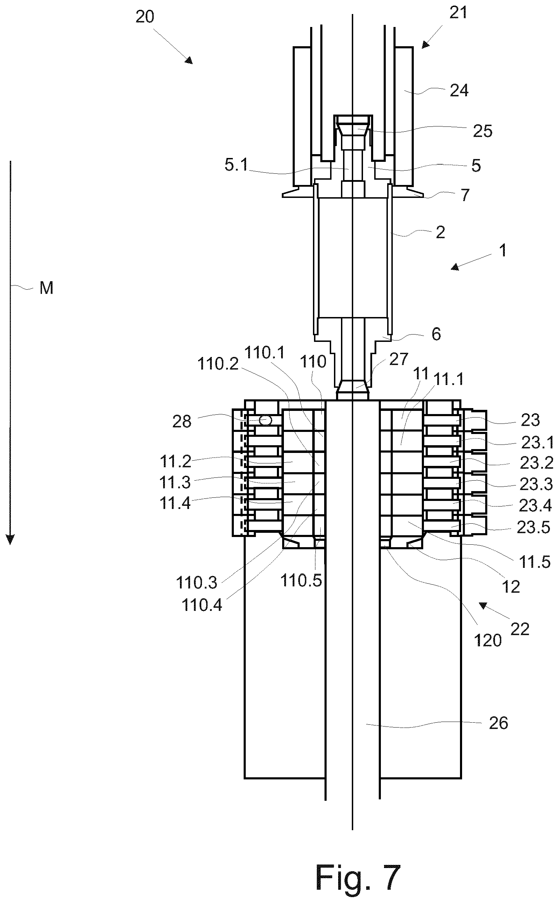

In der Figur 7 ist in einer seitlichen Schnittdarstellung eine Ausführungsform einer erfindungsgemäßen Montagevorrichtung 20 gezeigt. Aus Gründen der Übersichtlichkeit ist die Montagevorrichtung 20 nicht mit den bekannten Schnitten dargestellt. Die Montagevorrichtung 20 weist ein Ausrichtmittel 21 auf, welches vorteilhaft ein Futtersegment 24 sowie ein Aufnahmesegment 25 umfasst. Das Ausrichtmittel 21 wird vorteilhaft an dem ersten Flanschelement 5 der Rotorwelle 1 angeordnet, wobei das Futtersegment 24 zumindest einen Abschnitt des Flanschelementes 5 umgreift, während das Aufnahmesegment 25, welches beispielsweise in Gestalt eines Aufnahmedorns oder Aufnahmepins ausgebildet ist, zumindest abschnittsweise in die Ausnehmung 5.1 (vgl. Figur 2) des ersten Flanschelementes 5 eingreift. Hierbei ist es denkbar, dass das Aufnahmesegment 25 eine hier nicht gezeigte Außenverzahnung aufweist, welche mit einer Innenverzahnung des ersten Flanschelementes 5 wechselwirkt. So ist es denkbar, dass das Aufnahmesegment 25 in die Ausnehmung 5.1 des ersten Flanschelementes 5 eingeschraubt wird. Vorteilhaft ist das Aufnahmesegment 25 des Ausrichtmittels 21 mittels eines hier nicht gezeigten Federelementes, insbesondere eines Druckfederelementes gelagert Hierdurch ist vorteilhaft ein einfaches Anordnen des Ausrichtmittels 21 an der Rotorwelle 1 möglich.

Des Weiteren ist in der Figur 7 das Spannmittel 22 der Montagevorrichtung 20 gezeigt. Das Spannmittel 22 weist mindestens ein Positioniermodul 23, vorteilhaft eine Mehrzahl an Positioniermodulen 23 bis 23.5 auf. Vorteilhaft entspricht die Anzahl der Positioniermodule der Anzahl der auf das Wellensegment 2 der Rotorwelle 1 aufzubringenden Blechpakete. Demzufolge sind in dem Spannmittel 22 ebenfalls sechs Blechpakete 11 bis 11.5 angeordnet, welche mittels den entsprechenden Positioniermodulen 23 bis 23.5 hinsichtlich ihrer Position und Lage zur Rotorwelle 1, hinsichtlich ihrer Winkellage zueinander ausgerichtet werden. Des Weiteren ist das zweite Druckelement 12 im Spannmittel 22 angeordnet und schließt folglich die zueinander bzw. nacheinander in Reihe angeordneten Blechpakete 11-11.5 ab. Vorteilhaft weist das Spannmittel 22, insbesondere jedes Positioniermodul 23 bis 23.5 ein hier nicht gezeigtes Sensorelement auf, um die Position und Lage der einzelnen Blechpakete 11 bis 11.5 zu ermitteln. Es ist zudem denkbar, dass das Spannmittel 22, insbesondere jedes Positioniermodul 23 bis 23.5 des Spannmittels 22 ein hier nicht gezeigtes Ausrichtwerkzeug aufweist, mittels welchen insbesondere die Winkellage der einzelnen Blechpakete 11 bis 11.5 oder einzelner Blechscheiben eines einzigen Blechpaketes 11 einstellbar ist. Des Weiteren ist ein Aufnahmemittel 26 gezeigt, welches sich vorteilhaft durch das Spannmittel 22 hindurch erstreckt. Vorteilhaft weisen das Aufnahmemittel 26 und das Spannmittel 22 die gleiche zentrische Achse auf und sind folglich koaxial zueinander angeordnet. Vorteilhaft erstreckt sich das Aufnahmemittel 26 durch die Durchgangsbohrungen 110 bis 110.5 der Blechpakete 11 bis 11.5 sowie durch die Durchgangsbohrung 120 des zweiten Druckelementes 12, welches vorteilhaft das Druckscheibe ausgebildet ist hindurch und kontaktiert die Rotorwelle 1 an deren zweiten Flanschelement 6. Vorteilhaft weist das Aufnahmemittel 26 einen Aufnahmezapfen 27 auf, welcher sich zumindest abschnittsweise in eine Aussparung 6.1 (vgl. Figur 5) des zweiten Flanschelementes 6 hinein erstreckt. Mittels des Aufnahmemittels 26 und des Ausrichtmittels 21 ist die Rotorwelle 1 in einer definierten Position eingespannt und hinsichtlich des Spannmittels 22 und der darin angeordneten Blechpakete 11 bis 11.5 sowie des darin angeordneten zweiten Druckelementes 12 ausgerichtet.

Bei einem Zusammenfügen der Blechpakete 11 bis 11.5 mit der Rotorwelle 1, insbesondere dem Wellensegment 2 der Rotorwelle 1 erfolgt beispielsweise eine Bewegung des Ausrichtmittels 21 in Montagerichtung M oder des Spannmittels 22 entgegen der Montagerichtung M. Es ist auch denkbar, dass sich das Ausrichtmittel 21 sowie das Spannmittel 22 aufeinander zu bewegen, sodass zumindest zeitweise beide Mittel eine Bewegung durchführen. Die Montagebewegung des Ausrichtmittels 21 und/oder des Spannmittels 22 führt dazu, dass die Rotorwelle 1, insbesondere das Wellensegment 2 durch die Durchgangsbohrungen 110 bis 110.5 der Blechpakete 11 bis 11.5 sowie durch die Durchgangsbohrung 120 des zweiten Druckelementes 12 hindurch bewegt wird. Diese Bewegung erfolgt derart, bis eine Verpressung des zweiten Druckelementes 12 mit dem Wellensegment 2, insbesondere einer auf dem Wellensegment 2 aufgebrachten Rollierung (hier nicht gezeigt), insbesondere der zweiten Rollierung 4 (vgl. Figur 1) erfolgt.

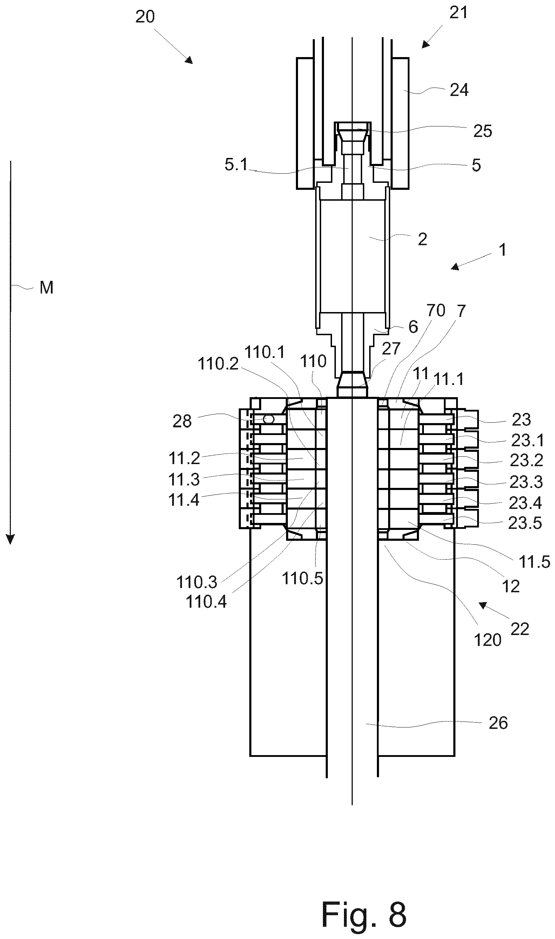

In der Figur 8 ist in einer seitlichen Schnittdarstellung eine weitere Ausführungsform einer erfindungsgemäßen Montagevorrichtung 20 gezeigt. Aus Gründen der Übersichtlichkeit ist die Montagevorrichtung 20 nicht mit den bekannten Schnitten dargestellt. Die Montagevorrichtung 20 unterscheidet sich von der in der Figur 7 gezeigten Montagevorrichtung 20 im Wesentlichen lediglich dadurch, dass auch das erste Druckelement 7 in dem Spannmittel 22 anordenbar ist. Vorteilhaft sind folglich das erste Druckelement 7, das zweite Druckelement 12 sowie wenigstens ein Blechpaket 23 und vorteilhaft eine Mehrzahl an Blechpaketen 23 bis 23.5 in dem Spannmittel 22 angeordnet, wobei die Blechpakete 23 bis 23.5 zwischen dem ersten Druckelement 7 und dem zweiten Druckelement 12 angeordnet sind. Alle weiteren Merkmale der Montagevorrichtung 20 entsprechen im Wesentlichen der in der Figur 7 gezeigten Ausführungsform einer Montagevorrichtung 20, sodass die hierzu aufgeführten Erläuterungen entsprechend Berücksichtigung finden bzw. finden können.

Bei einem Zusammenfügen der Blechpakete 11 bis 11.5 mit der Rotorwelle 1, insbesondere dem Wellensegment 2 der Rotorwelle 1 erfolgt, wie schon zu der Montagevorrichtung 20 gemäß der Figur 7 beschrieben, beispielsweise eine Bewegung des Ausrichtmittels 21 in Montagerichtung M oder des Spannmittels 22 entgegen der Montagerichtung M. Es ist auch denkbar, dass sich das Ausrichtmittel 21 sowie das Spannmittel 22 aufeinander zu bewegen, sodass zumindest zeitweise beide Mittel eine Bewegung durchführen. Die Montagebewegung des Ausrichtmittels 21 und/oder des Spannmittels 22 führt dazu, dass die Rotorwelle 1, insbesondere das Wellensegment 2 zuerst durch die Durchgangsbohrung 70 des ersten vorteilhaft als Druckscheibe ausgebildeten Druckelementes, danach durch die Durchgangsbohrungen 110 bis 110.5 der Blechpakete 11 bis 11.5 und letztlich durch die Durchgangsbohrung 120 des zweiten Druckelementes 12, welches vorteilhaft ebenfalls als Druckscheibe ausgebildet ist, hindurch bewegt wird. Diese Bewegung erfolgt derart, bis eine Verpressung wenigstens des ersten Druckelementes 7 mit dem Wellensegment 2, insbesondere einer auf dem Wellensegment 2 aufgebrachten Rollierung (hier nicht gezeigt), insbesondere der ersten Rollierung 3 (vgl. Figur 1), oder des zweiten Druckelementes 12 mit dem Wellensegment 2, insbesondere einer auf dem Wellensegment 2 aufgebrachten Rollierung (hier nicht gezeigt), insbesondere der zweiten Rollierung 4 (vgl. Figur 1) erfolgt.

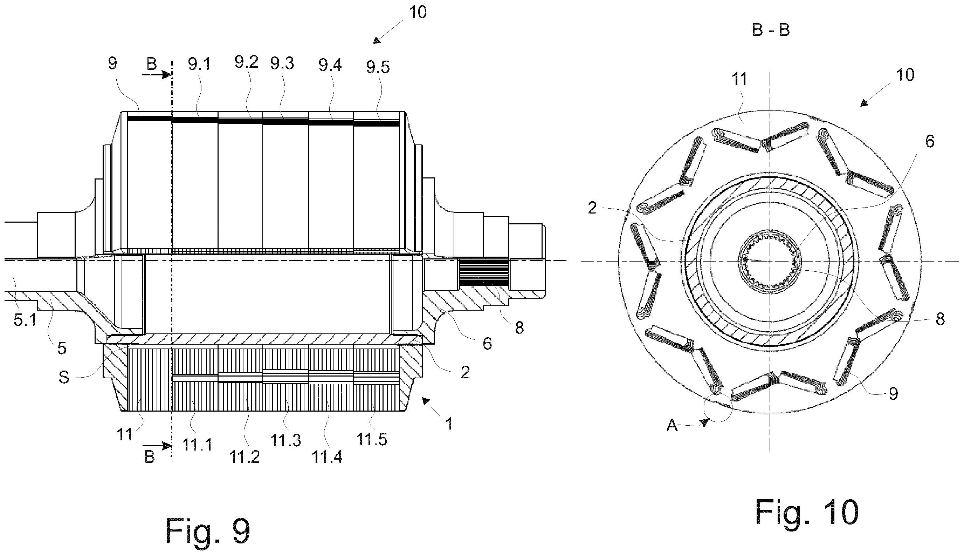

In der Figur 9 ist eine Ausführungsform eines Rotorsegmentes 10 einer elektrischen Maschine dargestellt, bei welcher die Blechpakete 11 bis 11.5 hinsichtlich ihrer Winkellage zueinander versetzt angeordnet sind. Diese versetzte Anordnung zeigt sich insbesondere durch die Positionierung der einzelnen Magnettaschen 9 bis 9.5 zueinander. Die Magnettaschen 9 bis 9.5 dienen vorteilhaft zur Anordnung von Dauermagneten im Blechpaket. Des Weiteren ist in der Figur 9 die Ausbildung des erwünschten Spaltes S dargestellt, welche sich zwischen den Blechpaketen 11 bis 11.5, insbesondere der Oberfläche der Durchgangsbohrung der einzelnen Blechpakete 11 bis 11.5, und dem Außendurchmesser des Wellensegmentes 2 der Rotorwelle 1 bildet.

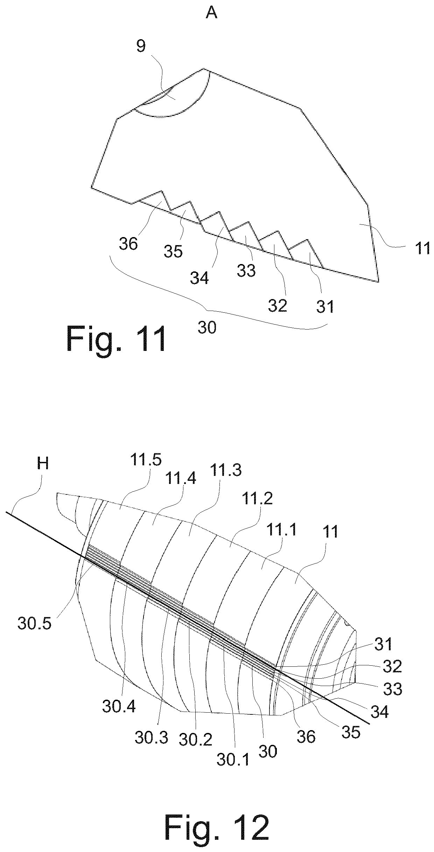

In der Figur 10 ist eine Draufsicht auf den Schnitt B - B, wie in der Figur 9 gezeigt, dargestellt. Hier ist zudem die Ausbildung der zueinander winkellageversetzten Magnettaschen 9 bis 9.5 dargestellt. Der in der Figur 10 gezeigte Ausschnitt A ist in der Figur 11 als Vergrößerung dargestellt. Hierbei ist insbesondere die Ausgestaltung einer Markierungen 30 eines einzelnen Blechpaketes 11 bis 11.5 (vgl. Figur 8) bzw. eines einzelnen Bleches eines Blechpaketes dargestellt. Die Markierung 30 weist vorteilhaft eine Mehrzahl an Merkmalen 31 bis 36 auf, welche beispielsweise als Ausnehmungen, Vertiefungen oder Kerben ausgebildet sind. Die Anzahl der Merkmale 31 bis 36 pro Markierung 30 entspricht vorteilhaft der Anzahl der zueinander winkellageversetzbaren Blechpakete 11 bzw. Bleche. Das bedeutet, dass beispielsweise bei sechs zueinander in deren Winkellage zu versetzenden Blechen jedes der sechs Bleche eine Markierung 30 mit sechs ausgeprägten Merkmalen 31 bis 35 aufweist. Demzufolge weist bei einer Anzahl von beispielsweise sechs zueinander in Winkellage zu versetzenden Blechpaketen 11 jedes der Blechpakete 11 zumindest eine Markierung 30 mit sechs Merkmalen 31 bis 36 auf. Der Winkelversatz der Markierungen 30 untereinander, gibt vorteilhaft den Winkelversatz der Blechpakete 11 zueinander wieder.

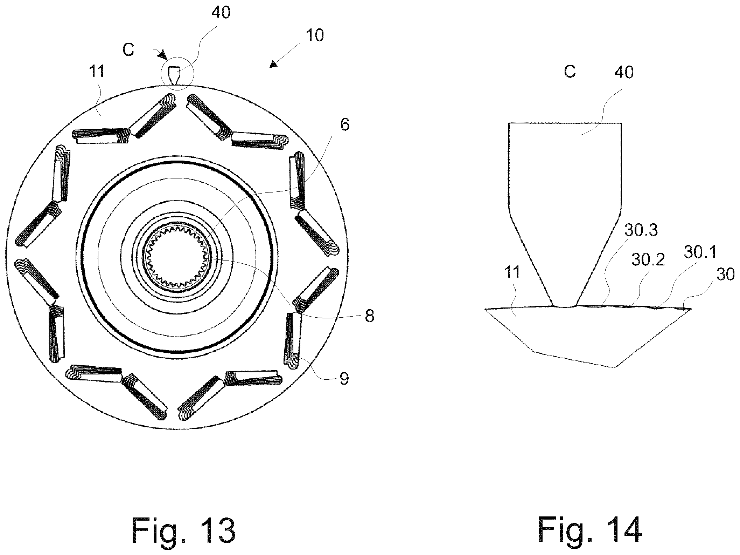

Die Positioniermodule 23 bis 23.5, wie beispielsweise in der Figur 7 oder in der Figur 8 gezeigt, ermitteln vorteilhaft mittels beispielsweise entsprechenden Sensoreinheiten bzw. Sensormitteln 28 die Position der Blechpakete 11 bis 11.5 bzw. der einzelnen Bleche eines einzigen Blechpaketes 11 nicht nur zum Wellensegment und zur Rotorwelle, sondern ebenfalls zueinander anhand der Markierungen 30 bis 30.5. Wie nachfolgend beispielsweise in der Figur 13 und in der Figur 14 gezeigt, wird mithilfe eines Ausrichtwerkzeuges 40, wie beispielsweise einer Schablone, die Positionierung der einzelnen Blechpakete 11 bis 11.5 bzw. der einzelnen Bleche eines einzelnen Blechpaketes 11 hinsichtlich deren Winkellage zueinander vorgenommen. Zur Verdeutlichung ist in der Figur 12 eine isometrische Ansicht der hinsichtlich derer Winkellage zueinander versetzt positionierten Blechpakete 11 bis 11.5 gezeigt. Jedes Blechpaket 11 bis 11.5 weist folglich eine Markierung 30 bis 30.5 auf, welche beispielsweise, wie in der Figur 12 gezeigt, in Gestalt von Rillen, Nuten bzw. Vertiefungen ausgebildet sind. Vorteilhaft weist jede Markierung 30 bis 30.5 eine Mehrzahl an als Rillen ausgebildeten Merkmalen 31 bis 36 auf, welche in Umfangsrichtung des einzelnen Blechpaketes 11 bis 11.5 betrachtet, beabstandet zueinander ausgebildet sind, sodass hierdurch in einfacher Weise ein unterschiedlicher Winkellageversatz der einzelnen Blechpakete 11 bis 11.5 eingestellt und erkannt werden kann. Der gewünschte Versatz der Winkellage wird vorteilhaft bei der Montage der Blechpakete 11 bis 11.5 derart ermöglicht, indem die Merkmale 31 bis 36 pro Markierung 30 bis 30.5 jeweils um eine Rastierung zueinander versetzt werden.

Wie bereits zuvor erwähnt, ist in den Figuren 13 und 14 ein Ausrichtwerkzeug 40 gezeigt, welches zur Positionierung der einzelnen Blechpakete 11 bis 11.5 oder der einzelnen Bleche eines Blechpaketes hinsichtlich derer Winkellage zueinander Anwendung findet. Das Ausrichtwerkzeug 40 ist vorteilhaft ein Bestandteil des Spannmittels 22, insbesondere der einzelnen Positioniermodule 23 bis 23.5. Vorteilhaft weist jedes Positioniermodul 23 bis 23.5 ein eigenes Ausrichtwerkzeug 40 auf. Es ist auch denkbar, dass das Ausrichtwerkzeug 40 entlang der einzelnen Positioniermodule 23 bis 23.5 wandert, um ein kontinuierliches Ausrichten der einzelnen Blechpakete 11 bis 11.5 zueinander zu ermöglichen. Das Ausrichtwerkzeug 40 greift vorteilhaft zumindest abschnittsweise in als Kerben, Ausnehmungen bzw. Vertiefungen ausgebildete Markierungen 30 bis 30.5 ein, um ein Verdrehen und Positionieren des Blechpaketes 11 bis 11. 5 bzw. einzelner Bleche eines einzigen Blechpaketes 11 bis 11.5 zu ermöglichen.

In der Figur 15 ist in einer Draufsicht ein Querschnitt einer Ausführungsform einer elektrischen Maschine 100 gezeigt. Die Elektrische Maschine 100 weist ein Rotorsegment 10 auf, welches eine mit wenigstens einem Blechpaket 11 bestückte Rotorwelle 1 aufweist. Das Rotorsegment 10 bzw. die Rotorwelle 1 ist innerhalb eines Stators 50 angeordnet. Aufgrund der durch die Anordnung der hier nicht gezeigten Wicklung und der in den Magnettaschen 9 angeordneten Permanentmagnete entstehenden Magnetfeldlinien (hier nicht gezeigt), welche sich während des Betriebes der elektrischen Maschine 100 ausbilden. Insbesondere zwischen den einzelnen Magnettaschen 9 entstehen magnetisch nicht aktive Bereiche, welche mit dem Bezugszeichen U gekennzeichnet sind. Diese magnetisch nicht aktiven Bereiche U werden vorteilhaft mittels des erfindungsgemäßen Verfahrens zur Montage eines Rotorsegmentes einer elektrischen Maschine zumindest minimiert, besonders vorteilhaft nicht ausgebildet. Um dies zu erreichen werden demzufolge die einzelnen Blechpakete 11 bis 11.5 hinsichtlich derer Winkellage versetzt zueinander angeordnet. Das bedeutet, dass der einzustellende Winkellageversatz der einzelnen Bleche eines Blechpaketes oder einzelner Blechpakete zueinander hinsichtlich der gewünschten magnetischen Auslegung erfolgt. Demnach wird vorteilhaft der Magnetflussverlauf für die Auswahl der Lage der Markierungen 30 bis 30.5 der einzelnen Bleche bzw. Blechpakete 11 bis 11.5 berücksichtigt. Besonders vorteilhaft ist es möglich, dass die zur Winkellageausrichtung erforderlichen Markierungen 30 bis 30.5 derart exakt hinsichtlich deren Lage bzw. Position sowie vorteilhaft auch hinsichtlich deren geometrischer Ausgestaltung ausgebildet und ausgerichtet werden, dass die Magnetflusslenkung in gewünschter Weise beeinflussbar ist. Vorteilhaft sind folglich die magnetische nicht aktiven Bereiche U, welche sich im Wesentlichen zumindest abschnittsweise um die Magnettaschen 9 herum erstrecken in Sättigung zu bringen.

In der Figur 16 ist eine Vergrößerung des Ausschnittes T, welcher in der Figur 15 aufgezeigt ist, dargestellt. Der Winkelversatz der einzelnen nacheinander angeordneten Blechpakete 11 bis 11.5 wird hierbei im Bereich der Magnettaschen 9, welche folglich ebenfalls einen Winkelversatz zueinander aufweisen, verdeutlicht. Bei der Ausgestaltung der Geometrie der konvexen oder konkaven Markierungen 30 bis 30.5 gelangen vorteilhaft strömungsgünstige Formen zur Anwendung. Vorteilhaft ist folglich die Vorzugsdrehrichtung - beispielsweise bei einer Vorwärtsfahrt eines Fahrzeuges, in welchem eine elektrische Maschine mit einem erfindungsgemäßen Rotorsegment angeordnet ist - zu berücksichtigen, um geringe Turbulenzen als möglich im Luftspaltdurchmesser zu erzeugen. Es ist auch denkbar aufgrund der geometrischen Ausgestaltung der Markierungen 30 bis 30.5 gewünschte konvektive Effekte im Luftspalt, wie beispielsweise Wirbel oder Strömungen zur konvektiven Entwärmung, zu erzeugen.

### Bezugszeichenliste

- 1: Rotorwelle
- 2: Wellensegment
- 2.1: erstes distales Ende des Wellensegmentes
- 2.2: zweites distales Ende des Wellensegmentes
- 2.3: erste Stirnseite des Wellensegmentes
- 2.4: zweite Stirnseite des Wellensegmentes
- 3: erste Materialaufwerfung/erste Rollierung
- 4: zweite Materialaufwerfung/zweite Rollierung
- 5: erstes Flanschelement
- 5.1: Ausnehmung des ersten Flanschelementes
- 6: zweites Flanschelement
- 6.1: Ausnehmung des zweiten Flanschelementes
- 7: Druckelement
- 7.1: Bohrungen
- 7.2: Seitenfläche
- 8: Innenverzahnung des ersten Flanschelementes
- 9-9.5: Magnettasche
- 10: Rotorsegment
- 11-11.5: Blechpaket
- 12: zweites Druckelement

- 20: Montagevorrichtung
- 21: Ausrichtmittel
- 22: Spannmittel
- 23-23.5: Positioniermodul
- 24: Futtersegment
- 25: Aufnahmesegment
- 26: Aufnahmemittel
- 27: Aufnahmezapfen
- 28: Sensormittel

- 30-30.5: Ausnehmung/Markierung
- 31-36: Merkmale

- 40: Ausrichtwerkzeug
- 50: Stator

- 100: elektrische Maschine
- 110-110.5: Durchgangsöffnung der Blechpakete
- 111: Seitenfläche des Blechpaketes

- 120: Durchgangsöffnung des Druckelementes

- H: Hilfslinie zur Darstellung einer Ausrichtkante
- L: Längsachse
- M: Montagerichtung
- U: nicht magnetisch aktive Bereiche.

## Patentansprüche

1. Verfahren zur Montage eines Rotorsegmentes (10) einer elektrischen Maschine, wobei das Rotorsegment (10) zumindest eine Rotorwelle (1), wenigstens zwei auf der Rotorwelle (1) gefügte Blechpakete (11, 11.1, 11.2, 11.3, 11.4, 11.5) sowie zwei die wenigstens zwei Blechpakete (11, 11.1, 11.2, 11.3, 11.4, 11.5) axial einspannende Druckelemente (7, 12) aufweist, und wobei das Verfahren zumindest die folgenden Schritte aufweist:
- Anordnen der Rotorwelle (1) in einer Montagevorrichtung (20) und Ausrichten der Rotorwelle (1) mittels eines Ausrichtmittels (21) der Montagevorrichtung (20);
- Anordnen der wenigstens zwei Blechpakete (11, 11.1, 11.2, 11.3, 11.4, 11.5) sowie zumindest des zweiten Druckelementes (12) oder des ersten Druckelementes (7), innerhalb eines Spannmittels (22) der Montagevorrichtung (20),
- Ausrichten zumindest der wenigstens zwei Blechpakete (11, 11.1, 11.2, 11.3, 11.4, 11.5) hinsichtlich deren Winkellage mittels eines Positioniermoduls (23, 23.1, 23.2, 23.3, 23.4, 23.5) des Spannmittels (22), wobei die Anzahl der Positioniermodule (23, 23.1, 23.2, 23.3, 23.4, 23.5) der Anzahl der auf der Rotorwelle (1) anzuordnenden Blechpakete (11, 11.1, 11.2, 11.3, 11.4, 11.5) entspricht, und
- Bewegen der Rotorwelle (1) relativ zu dem Spannmittel (22) derart, dass die wenigstens zwei Blechpakete (11, 11.1, 11.2, 11.3, 11.4, 11.5) auf der Rotorwelle (1) aufgeschoben und zumindest das zweite Druckelement (12) oder das erste Druckelement (7) mit der Rotorwelle (1) verbunden wird.

2. Verfahren gemäß Anspruch 1,
**dadurch gekennzeichnet, dass**
die Rotorwelle (1) vormontiert wird, wobei ein Wellensegment (2) der Rotorwelle (1) mit wenigstens einem der Druckelemente (7, 12), insbesondere dem ersten Druckelement (7), derart verbunden wird, dass das erste Druckelement (7) an einem ersten distalen Ende (2.1) des Wellensegmentes (2) angeordnet wird.

3. Verfahren gemäß Anspruch 2,
**dadurch gekennzeichnet, dass**
das Wellensegment (2) zumindest mit einem ersten Flanschelement (5), welches an einer ersten Stirnseite (2.3) des Wellensegmentes (2) angeordnet wird oder mit einem zweiten Flanschelement (6), welches an einer zweiten Stirnseite (2.4) des Wellensegmentes (2) angeordnet wird, verbunden wird.

4. Verfahren gemäß wenigstens einem der vorangegangenen Ansprüche,
**dadurch gekennzeichnet, dass**
die Rotorwelle (1) derart relativ zum Spannmittel (22) bewegt wird, bis die mindestens zwei Blechpakete (11, 11.1, 11.2, 11.3, 11.4, 11.5) ein an der Rotorwelle (1) vormontiertes Druckelement (7, 12), insbesondere das erste Druckelement (7), kontaktiert.

5. Verfahren gemäß wenigstens einem der vorangegangenen Ansprüche,
**dadurch gekennzeichnet, dass**
das Ausrichtmittel (21) an ein erstes Flanschelement (5) der Rotorwelle (1) derart angeordnet wird, dass zumindest ein Futtersegment (24) des Ausrichtmittels (21) einen Abschnitt des ersten Flanschelementes (5) zumindest abschnittsweise umgreift oder ein Aufnahmesegment (25) des Ausrichtmittels (21) zumindest abschnittsweise in eine Ausnehmung (5.1) des ersten Flanschelementes (5) eingreift.

6. Verfahren gemäß wenigstens einem der vorangegangenen Ansprüche 3 bis 5
**dadurch gekennzeichnet, dass**
ein Aufnahmemittel (26) zur Aufnahme und Führung der Rotorwelle (1) an einem zweiten Flanschelement (12) der Rotorwelle (1) angeordnet wird, wobei das Aufnahmemittel (26) derart bewegbar ausgestaltet ist, dass es zwischen dem Spannmittel (22) und der Rotorwelle (1) verfahrbar ist.

7. Verfahren gemäß Anspruch 6,
**dadurch gekennzeichnet, dass**
das Aufnahmemittel (26) gemeinsam mit der Rotorwelle (1) entlang des Spannmittels (22) bewegt wird.

8. Verfahren gemäß wenigstens einem der vorangegangenen Ansprüche,
**dadurch gekennzeichnet, dass**
ein Sensormittel (28) des Spannmittels (22) die Winkellage von zumindest einer Markierung (30, 30.1, 30.2, 30.3, 30.4, 30.5) der wenigstens zwei Blechpakete (11, 11.1, 11.2, 11.3, 11.4, 11.5) erfasst.

9. Verfahren gemäß wenigstens einem der vorangegangenen Ansprüche,
**dadurch gekennzeichnet, dass**
eine Mehrzahl an hinsichtlich deren Winkellage zueinander versetzbaren Blechpaketen (11, 11.1, 11.2, 11.3, 11.4, 11.5) auf der Rotorwelle (1) angeordnet werden, wobei die Einstellung der Winkellage mittels eines Ausrichtwerkzeuges (40) erfolgt, welches die Blechpakete (11, 11.1, 11.2, 11.3, 11.4, 11.5) in Berücksichtigung von an den Blechpaketen (11, 11.1, 11.2, 11.3, 11.4, 11.5) jeweils angeordneten Markierungen (30, 30.1, 30.2, 30.3, 30.4, 30.5) zueinander positioniert.

10. Verfahren gemäß Anspruch 9,
**dadurch gekennzeichnet, dass**
die Markierungen (30, 30.1, 30.2, 30.3, 30.4, 30.5) derart untereinander winkelversetzt positioniert werden, dass dadurch der Winkelversatz der Blechpakete (11, 11.1, 11.2, 11.3, 11.4, 11.5) eingestellt und wiedergegeben wird.

11. Montagevorrichtung (20) zur Montage eines Rotorsegmentes (10) einer elektrischen Maschine, wobei das Rotorsegment (10) zumindest eine Rotorwelle (1), wenigstens zwei auf der Rotorwelle (1) gefügte Blechpakete (11, 11.1, 11.2, 11.3, 11.4, 11.5) sowie zwei die wenigstens zwei Blechpaket (11, 11.1, 11.2, 11.3, 11.4, 11.5) axial einspannende Druckelemente (7, 12) aufweist, wobei die Montagevorrichtung (20) zumindest ein Ausrichtmittel (21) zum Ausrichten der Rotorwelle (1) in einer definierten Montageposition und ein Spannmittel (22) zum Positionieren der wenigstens zwei Blechpakete (11, 11.1, 11.2, 11.3, 11.4, 11.5) sowie wenigstens eines der Druckelemente (7, 12) relativ zur Rotorwelle (1) aufweist, wobei das Spannmittel (22) zumindest ein Positioniermodul (23, 23.1, 23.2, 23.3, 23.4, 23.5) zum Ausrichten der wenigstens zwei Blechpakete (11, 11.1, 11.2, 11.3, 11.4, 11.5) hinsichtlich dessen Winkellage relativ zur Rotorwelle (1) umfasst, wobei die Anzahl der Positioniermodule (23, 23.1, 23.2, 23.3, 23.4, 23.5) der Anzahl der auf der Rotorwelle (1) anzuordnenden Blechpakete (11, 11.1, 11.2, 11.3, 11.4, 11.5) entspricht.

12. Montagevorrichtung gemäß Anspruch 11,
**dadurch gekennzeichnet, dass**
das Spannelement (22) ein Spanntopf zur Aufnahme und Anordnung der mindestens zwei Blechpakete (11, 11.1, 11.2, 11.3, 11.4, 11.5) sowie eines der Druckelemente (7, 12), insbesondere des zweiten Druckelementes (12) ist.

13. Montagevorrichtung gemäß wenigstens einem der vorangegangenen Ansprüche 11 oder 12,
**dadurch gekennzeichnet, dass**
das Ausrichtmittel (21) zumindest ein Futtersegment (24) zur teilweise umschließenden Aufnahme eines Abschnittes der Rotorwelle (1) oder ein Aufnahmesegment (25) zur teilweise eingreifenden Aufnahme in einen Abschnitt der Rotorwelle (1) aufweist.

14. Montagevorrichtung gemäß Anspruch 13,
**dadurch gekennzeichnet, dass**
das Aufnahmesegment (25) federn gelagert ist.

15. Rotorsegment (1) aufweisend ein Wellensegment (2) sowie zumindest zwei zueinander winkellageversetzt anordenbare Blechpakete (11, 11.1, 11.2, 11.3, 11.4, 11.5), wobei jedes der Blechpakete (11, 11.1, 11.2, 11.3, 11.4, 11.5) zumindest eine Markierung (30, 30.1, 30.2, 30.3, 30.4, 30.5) aufweist, wobei die Markierung (30, 30.1, 30.2, 30.3, 30.4, 30.5) dazu dient, eine Winkellageausrichtung der einzelnen Blechpakete zu ermöglichen,
**dadurch gekennzeichnet, dass**
die Markierung (30, 30.1, 30.2, 30.3, 30.4, 30.5) eine Mehrzahl an Merkmalen (31, 32, 33, 34, 35, 36) aufweist, wobei die Anzahl der Merkmale (31, 32, 33, 34, 35, 36) pro Markierung (30, 30.1, 30.2, 30.3, 30.4, 30.5) der Anzahl der auf dem Wellensegment (2) zu fügenden und zueinander winkellageversetzbaren Blechpakete (11, 11.1, 11.2, 11.3, 11.4, 11.5) entspricht..

16. Rotorsegment (1) gemäß Anspruch 15,
**dadurch gekennzeichnet, dass**
das Rotorsegment (1) zwei Druckelemente (7, 12) aufweist, welche die wenigstens zwei Blechpakete (11, 11.1, 11.2, 11.3, 11.4, 11.5) zwischen einander einspannen.

17. Rotorsegment (1) gemäß wenigstens einem der vorangegangenen Ansprüche 15 oder 16,
**dadurch gekennzeichnet, dass**
die Blechpakete (11, 11.1, 11.2, 11.3, 11.4, 11.5) aus einer Mehrzahl an aneinander angeordneter Bleche bestehen, wobei jedes Blech eine Markierung (30, 30.1, 30.2, 30.3, 30.4, 30.5) aufweist.

18. Rotorsegment (1) gemäß Anspruch 17,
**dadurch gekennzeichnet, dass**
die einzelnen Bleche pro Blechpaket (11, 11.1, 11.2, 11.3, 11.4, 11.5) derart zueinander ausgerichtet sind, dass deren Markierungen (30, 30.1, 30.2, 30.3, 30.4, 30.5) miteinander fluchten.

19. Rotorsegment (1) gemäß Anspruch wenigstens einem der vorangegangenen Ansprüche 15 bis 18, **dadurch gekennzeichnet, dass**
die Markierungen (30, 30.1, 30.2, 30.3, 30.4, 30.5) derart untereinander winkellageversetzt angeordnet sind, dass diese den Winkelversatz der Blechpakete (11, 11.1, 11.2, 11.3, 11.4, 11.5) wiedergeben.

## Claims

1. Method for assembling a rotor segment (10) of an electric machine, wherein the rotor segment (10) has at least one rotor shaft (1), at least two laminated cores (11, 11.1, 11.2, 11.3, 11.4, 11.5) joined to the rotor shaft (1), and two pressure elements (7, 12), which axially clamp the at least two laminated cores (11, 11.1, 11.2, 11.3, 11.4, 11.5), and wherein the method has at least the following steps:
- arranging the rotor shaft (1) in an assembly device (20) and orienting the rotor shaft (1) using an orienting means (21) of the assembly device (20);
- arranging the at least two laminated cores (11, 11.1, 11.2, 11.3, 11.4, 11.5) and at least the second pressure element (12) or the first pressure element (7) within a clamping means (22) of the assembly device (20),
- orienting at least the at least two laminated cores (11, 11.1, 11.2, 11.3, 11.4, 11.5) in regard to their angular position by means of a positioning module (23, 23.1, 23.2, 23.3, 23.4, 23.5) of the clamping means (22), wherein the number of positioning modules (23, 23.1, 23.2, 23.3, 23.4, 23.5) corresponds to the number of laminated cores (11, 11.1, 11.2, 11.3, 11.4, 11.5) being arranged on the rotor shaft (1), and
- moving the rotor shaft (1) in relation to the clamping means (22) in such a way that the at least two laminated cores (11, 11.1, 11.2, 11.3, 11.4, 11.5) are pushed onto the rotor shaft (1) and at least the second pressure element (12) or the first pressure element (7) is connected to the rotor shaft (1).

2. Method according to Claim 1, **characterized in that** the rotor shaft (1) is premounted, wherein a shaft segment (2) of the rotor shaft (1) is connected to at least one of the pressure elements (7, 12), especially the first pressure element (7), such that the first pressure element (7) is arranged at a first distal end (2.1) of the shaft segment (2).

3. Method according to Claim 2, **characterized in that** the shaft segment (2) is at least connected to a first flange element (5), which is arranged on a first end face (2.3) of the shaft segment (2), or to a second flange element (6), which is arranged on a second end face (2.4) of the shaft segment (2).

4. Method according to at least one of the preceding claims, **characterized in that** the rotor shaft (1) is moved relative to the clamping means (22) until the at least two laminated cores (11, 11.1, 11.2, 11.3, 11.4, 11.5) make contact with a pressure element (7, 12) premounted on the rotor shaft (1), especially the first pressure element (7).

5. Method according to at least one of the preceding claims, **characterized in that** the orienting means (21) is arranged on a first flange element (5) of the rotor shaft (1) such that at least one chuck segment (24) of the orienting means (21) encloses at least partly a section of the first flange element (5) or a receiving segment (25) of the orienting means (21) engages at least partly with a recess (5.1) of the first flange element (5).

6. Method according to at least one of the preceding Claims 3 to 5, **characterized in that** a receiving means (26) for the receiving and guiding of the rotor shaft (1) is arranged on a second flange element (12) of the rotor shaft (1), the receiving means (26) being designed to be movable such that it can move between the clamping means (22) and the rotor shaft (1).

7. Method according to Claim 6, **characterized in that** the receiving means (26) is moved together with the rotor shaft (1) along the clamping means (22).

8. Method according to at least one of the preceding claims, **characterized in that** a sensor means (28) of the clamping means (22) detects the angular position of at least one marking (30, 30.1, 30.2, 30.3, 30.4, 30.5) of the at least two laminated cores (11, 11.1, 11.2, 11.3, 11.4, 11.5).

9. Method according to at least one of the preceding claims, **characterized in that** a plurality of laminated cores (11, 11.1, 11.2, 11.3, 11.4, 11.5) which can be offset relative to each other in regard to their angular position are arranged on the rotor shaft (1), while the adjusting of the angular position is done by means of an orienting tool (40), which positions the laminated cores (11, 11.1, 11.2, 11.3, 11.4, 11.5) with respect to each other in consideration of markings (30, 30.1, 30.2, 30.3, 30.4, 30.5) arranged on each of the laminated cores (11, 11.1, 11.2, 11.3, 11.4, 11.5).

10. Method according to Claim 9, **characterized in that** the markings (30, 30.1, 30.2, 30.3, 30.4, 30.5) are positioned with an angle offset relative to each other such that the angle offset of the laminated cores (11, 11.1, 11.2, 11.3, 11.4, 11.5) is adjusted and represented in this way.

11. Assembly device (20) for the assembling of a rotor segment (10) of an electric machine, wherein the rotor segment (10) has at least one rotor shaft (1), at least two laminated cores (11, 11.1, 11.2, 11.3, 11.4, 11.5) joined to the rotor shaft (1), and two pressure elements (7, 12), which axially clamp the at least two laminated cores (11, 11.1, 11.2, 11.3, 11.4, 11.5), wherein the assembly device (20) has at least one orienting means (21) for orienting the rotor shaft (1) in a defined assembly position and a clamping means (22) for positioning the at least two laminated cores (11, 11.1, 11.2, 11.3, 11.4, 11.5) as well as at least one of the pressure elements (7, 12) relative to the rotor shaft (1), wherein the clamping means (22) comprises at least one positioning module (23, 23.1, 23.2, 23.3, 23.4, 23.5) for orienting the at least two laminated cores (11, 11.1, 11.2, 11.3, 11.4, 11.5) in regard to their angular position relative to the rotor shaft (1) wherein the number of positioning modules (23, 23.1, 23.2, 23.3, 23.4, 23.5) corresponds to the number of laminated cores (11, 11.1, 11.2, 11.3, 11.4, 11.5) being arranged on the rotor shaft (1).

12. Assembly device according to Claim 11, **characterized in that** the clamping element (22) is a chuck for receiving and arranging the at least two laminated cores (11, 11.1, 11.2, 11.3, 11.4, 11.5) as well as one of the pressure elements (7, 12), especially the second pressure element (12).

13. Assembly device according to at least one of the preceding Claims 11 or 12, **characterized in that** the orienting means (21) comprises at least one chuck segment (24) for partly enclosing and receiving a section of the rotor shaft (1) or a receiving segment (25) for partly engaging with and receiving a section of the rotor shaft (1).

14. Assembly device according to Claim 13, **characterized in that** the receiving segment (25) is spring-loaded.

15. Rotor segment (1) having a shaft segment (2) and at least two laminated cores (11, 11.1, 11.2, 11.3, 11.4, 11.5), which can be arranged at an offset to each other in relation to angular position, wherein each of the laminated cores (11, 11.1, 11.2, 11.3, 11.4, 11.5) has at least one marking (30, 30.1, 30.2, 30.3, 30.4, 30.5), wherein the marking (30, 30.1, 30.2, 30.3, 30.4, 30.5) serves to make possible an angular position orienting of the individual laminated cores, **characterized in that** the marking (30, 30.1, 30.2, 30.3, 30.4, 30.5) has a plurality of features (31, 32, 33, 34, 35, 36), wherein the number of features (31, 32, 33, 34, 35, 36) per marking (30, 30.1, 30.2, 30.3, 30.4, 30.5) corresponds to the number of laminated cores (11, 11.1, 11.2, 11.3, 11.4, 11.5) being joined on the shaft segment (2) and being able to be offset in angular position relative to each other.

16. Rotor segment (1) according to Claim 15, **characterized in that** the rotor segment (1) has two pressure elements (7, 12), which clamp the at least two laminated cores (11, 11.1, 11.2, 11.3, 11.4, 11.5) between each other.

17. Rotor segment (1) according to at least one of the preceding Claims 15 or 16, **characterized in that** the laminated cores (11, 11.1, 11.2, 11.3, 11.4, 11.5) consist of a plurality of metal sheets arranged next to each other, each metal sheet having a marking (30, 30.1, 30.2, 30.3, 30.4, 30.5).

18. Rotor segment (1) according to Claim 17, **characterized in that** the individual metal sheets of each laminated core (11, 11.1, 11.2, 11.3, 11.4, 11.5) are oriented with respect to each other such that their markings (30, 30.1, 30.2, 30.3, 30.4, 30.5) are flush with each other.

19. Rotor segment (1) according to Claim at least one of the preceding Claims 15 to 18, **characterized in that** the markings (30, 30.1, 30.2, 30.3, 30.4, 30.5) are arranged with an offset angular position relative to each other such that they reflect the angle offset of the laminated cores (11, 11.1, 11.2, 11.3, 11.4, 11.5).

## Revendications

1. Procédé de montage d'un segment de rotor (10) d'une machine électrique, le segment de rotor (10) présentant au moins un arbre de rotor (1), au moins deux empilements de tôles (11, 11.1, 11.2, 11.3, 11.4, 11.5) assemblés sur l'arbre de rotor (1) ainsi que deux éléments de pression (7, 12) serrant axialement les au moins deux empilements de tôles (11, 11.1, 11.2, 11.3, 11.4, 11.5), et le procédé présentant au moins les étapes suivantes :
- agencement de l'arbre de rotor (1) dans un dispositif de montage (20) et orientation de l'arbre de rotor (1) au moyen d'un moyen d'orientation (21) du dispositif de montage (20) ;
- agencement des au moins deux empilements de tôles (11, 11.1, 11.2, 11.3, 11.4, 11.5) et d'au moins le deuxième élément de pression (12) ou le premier élément de pression (7) à l'intérieur d'un moyen de serrage (22) du dispositif de montage (20),
- orientation des au moins deux empilements de tôles (11, 11.1, 11.2, 11.3, 11.4, 11.5) en termes de leur position angulaire au moyen d'un module de positionnement (23, 23.1, 23.2, 23.3, 23.4, 23.5) du moyen de serrage (22), le nombre des modules de positionnement (23, 23.1, 23.2, 23.3, 23.4, 23.5) correspondant au nombre des empilements de tôles (11, 11.1, 11.2, 11.3, 11.4, 11.5) devant être disposés sur l'arbre de rotor (1), et
- déplacement de l'arbre de rotor (1) par rapport au moyen de serrage (22) de telle sorte que les au moins deux empilements de tôles (11, 11.1, 11.2, 11.3, 11.4, 11.5) soient poussés sur l'arbre de rotor (1) et qu'au moins le deuxième élément de pression (12) ou le premier élément de pression (7) soit connecté à l'arbre de rotor (1).

2. Procédé selon la revendication 1,
**caractérisé en ce que**
l'arbre de rotor (1) est prémonté, un segment d'arbre (2) de l'arbre de rotor (1) étant connecté à au moins l'un des éléments de pression (7, 12), en particulier au premier élément de pression (7) de telle sorte que le premier élément de pression (7) soit disposé au niveau d'une première extrémité distale (2.1) du segment d'arbre (2).

3. Procédé selon la revendication 2,
**caractérisé en ce que**
le segment d'arbre (2) est connecté au moins à un premier élément de bride (5) qui est disposé au niveau d'un premier côté frontal (2.3) du segment d'arbre (2) ou à un deuxième élément de bride (6) qui est disposée au niveau d'un deuxième côté frontal (2.4) du segment d'arbre (2).

4. Procédé selon au moins l'une quelconque des revendications précédentes,
**caractérisé en ce que**
l'arbre de rotor (1) est déplacé par rapport au moyen de serrage (22) jusqu'à ce que les au moins deux empilements de tôles (11, 11.1, 11.2, 11.3, 11.4, 11.5) viennent en contact avec un élément de pression (7, 12) prémonté sur l'arbre de rotor (1), en particulier le premier élément de pression (7, 12).

5. Procédé selon au moins l'une quelconque des revendications précédentes,
**caractérisé en ce que**
le moyen d'orientation (21) est disposé au niveau d'un premier élément de bride (5) de l'arbre de rotor (1) de telle sorte qu'au moins un segment de mandrin (24) du moyen d'orientation (21) vienne en prise au moins en partie autour d'une portion du premier élément de bride (5) ou qu'un segment de réception (25) du moyen d'orientation (21) vienne en prise au moins en partie dans un évidement (5.1) du premier élément de bride (5).

6. Procédé selon au moins l'une quelconque des revendications précédentes 3 à 5,
**caractérisé en ce**
**qu'**un moyen de réception (26) pour recevoir et guider l'arbre de rotor (1) est disposé au niveau d'un deuxième élément de bride (12) de l'arbre de rotor (1), le moyen de réception (26) étant configuré de manière déplaçable, de manière à pouvoir être déplacé entre le moyen de serrage (22) et l'arbre de rotor (1).

7. Procédé selon la revendication 6,
**caractérisé en ce que**
le moyen de réception (26) est déplacé conjointement avec l'arbre de rotor (1) le long du moyen de serrage (22).

8. Procédé selon au moins l'une quelconque des revendications précédentes,
**caractérisé en ce**
**qu'**un moyen de capteur (28) du moyen de serrage (22) détecte la position angulaire d'au moins un marquage (30, 30.1, 30.2, 30.3, 30.4, 30.5) des au moins deux empilements de tôles (11, 11.1, 11.2, 11.3, 11.4, 11.5).

9. Procédé selon au moins l'une quelconque des revendications précédentes,
**caractérisé en ce**
**qu'**une pluralité d'empilements de tôles (11, 11.1, 11.2, 11.3, 11.4, 11.5) pouvant être décalés les uns par rapport aux autres en termes de leur position angulaire sont disposés sur l'arbre de rotor (1), l'ajustement de la position angulaire s'effectuant au moyen d'un outil d'orientation (40) qui positionne les empilements de tôles (11, 11.1, 11.2, 11.3, 11.4, 11.5) les uns par rapport des autres en tenant compte de marquages (30, 30.1, 30.2, 30.3, 30.4, 30.5) disposés à chaque fois sur les empilements de tôles (11, 11.1, 11.2, 11.3, 11.4, 11.5).

10. Procédé selon la revendication 9,
**caractérisé en ce que**
les marquages (30, 30.1, 30.2, 30.3, 30.4, 30.5) sont positionnées de manière décalée angulairement les uns par rapport aux autres de telle sorte que le décalage angulaire des empilements de tôles (11, 11.1, 11.2, 11.3, 11.4, 11.5) soit ainsi ajusté et reproduit.

11. Dispositif de montage (20) pour le montage d'un segment de rotor (10) d'une machine électrique, le segment de rotor (10) présentant au moins un arbre de rotor (1), au moins deux empilements de tôles (11, 11.1, 11.2, 11.3, 11.4, 11.5) assemblés sur l'arbre de rotor (1) ainsi que deux éléments de pression (7, 12) serrant axialement les au moins deux empilements de tôles (11, 11.1, 11.2, 11.3, 11.4, 11.5), le dispositif de montage (20) présentant au moins un moyen d'orientation (21) pour l'orientation de l'arbre de rotor (1) dans une position de montage définie et un moyen de serrage (22) pour positionner les au moins deux empilements de tôles (11, 11.1, 11.2, 11.3, 11.4, 11.5) ainsi qu'au moins l'un des éléments de pression (7, 12) par rapport à l'arbre de rotor (1), le moyen de serrage (22) comprenant au moins un module de positionnement (23, 23.1, 23.2, 23.3, 23.4, 23.5) pour l'orientation des au moins deux empilements de tôles (11, 11.1, 11.2, 11.3, 11.4, 11.5) en termes de leur position angulaire par rapport à l'arbre de rotor (1), le nombre des modules de positionnement (23, 23.1, 23.2, 23.3, 23.4, 23.5) correspondant au nombre des empilements de tôles (11, 11.1, 11.2, 11.3, 11.4, 11.5) devant être disposés sur l'arbre de rotor (1) .

12. Dispositif de montage selon la revendication 11, **caractérisé en ce que**
l'élément de serrage (22) est un pot de serrage pour recevoir et disposer les au moins deux empilements de tôles (11, 11.1, 11.2, 11.3, 11.4, 11.5) ainsi que l'un des éléments de pression (7, 12), en particulier du deuxième élément de pression (12).

13. Dispositif de montage selon au moins l'une quelconque des revendications précédentes 11 ou 12,
**caractérisé en ce que**
le moyen d'orientation (21) présente au moins un segment de mandrin (24) pour recevoir en l'entourant au moins en partie une portion d'arbre de rotor (1) ou un segment de réception (25) pour la réception par engagement au moins partiel dans une portion d'arbre de rotor (1).

14. Dispositif de montage selon la revendication 13, **caractérisé en ce que**
le segment de réception (25) est supporté à ressort.

15. Segment de rotor (1) présentant un segment d'arbre (2) ainsi qu'au moins deux empilements de tôles (11, 11.1, 11.2, 11.3, 11.4, 11.5) pouvant être disposés de manière décalée les uns par rapport aux autres en termes de leur position angulaire, chacun des empilements de tôles (11, 11.1, 11.2, 11.3, 11.4, 11.5) présentant au moins un marquage (30, 30.1, 30.2, 30.3, 30.4, 30.5), le marquage (30, 30.1, 30.2, 30.3, 30.4, 30.5) servant à permettre l'orientation en position angulaire des empilements de tôles individuels,
**caractérisé en ce que**
le marquage (30, 30.1, 30.2, 30.3, 30.4, 30.5) présente une pluralité de caractéristiques (31, 32, 33, 34, 35, 36), le nombre des caractéristiques (31, 32, 33, 34, 35, 36) par marquage (30, 30.1, 30.2, 30.3, 30.4, 30.5) correspondant au nombre des empilements de tôles (11, 11.1, 11.2, 11.3, 11.4, 11.5) pouvant être décalés les uns par rapport aux autres en termes de leur position angulaire et devant être assemblés sur le segment d'arbre (2).

16. Segment de rotor (1) selon la revendication 15, **caractérisé en ce que**
le segment de rotor (1) présente deux éléments de pression (7, 12) qui serrent entre eux les moins deux empilements de tôles (11, 11.1, 11.2, 11.3, 11.4, 11.5).

17. Segment de rotor (1) selon au moins l'une quelconque des revendications précédentes 15 ou 16,
**caractérisé en ce que**
les empilements de tôles (11, 11.1, 11.2, 11.3, 11.4, 11.5) se composent d'une pluralité de tôle disposées les unes contre les autres, chaque tôles présentant un marquage (30, 30.1, 30.2, 30.3, 30.4, 30.5).

18. Segment de rotor (1) selon la revendication 17, **caractérisé en ce que**
les tôles individuelles de chaque empilement de tôles (11, 11.1, 11.2, 11.3, 11.4, 11.5) sont orientées les unes par rapport aux autres de telle sorte que leurs marquages (30, 30.1, 30.2, 30.3, 30.4, 30.5) soient alignés les uns avec les autres.

19. Segment de rotor (1) selon la revendication au moins l'une quelconque des revendications précédentes 15 à 18,
**caractérisé en ce que**
les marquages (30, 30.1, 30.2, 30.3, 30.4, 30.5) sont disposés de manière décalée les uns des autres en termes de leur position angulaire de telle sorte qu'ils reproduisent le décalage angulaire des empilements de tôles (11, 11.1, 11.2, 11.3, 11.4, 11.5).
